# FASCICULE DE BREVET EUROPEEN

(11) **EP 4 374 304 B1**
(45) Date de publication et mention de la délivrance du brevet: **27.08.2025**
(21) Numéro de dépôt: 22754846.8
(22) Date de dépôt: 20.07.2022
(51) Int. Cl.: G06Q 10/06, G06Q 10/0631, B60L 53/67, B60L 53/68, G06Q 50/40

(54) **PROCÉDÉ ET SYSTÈME POUR COMMANDER L'ACTIVATION DE BORNES DE RECHARGES DE VÉHICULES ÉLECTRIQUES**
VERFAHREN UND SYSTEM ZUR STEUERUNG DER AKTIVIERUNG VON LADESTATIONEN FÜR ELEKTROFAHRZEUGE
METHOD AND SYSTEM FOR CONTROLLING THE ACTIVATION OF CHARGING STATIONS FOR ELECTRIC VEHICLES

(30) Priorité: 20.07.2021 FR 2107807
(43) Date de publication de la demande: 29.05.2024
(73) Titulaire: Vulog, 06200 Nice (FR)
(72) Inventeur: COLON, François, 13013 MARSEILLE (FR)
(74) Mandataire: Roman, Alexis
(86) Numéro de dépôt international: PCT/EP2022/070385
(87) Numéro de publication internationale: WO 2023/001902

(56) Documents cités:
- CN-A- 111 401 627
- CN-B- 105 957 259
- FR-A1- 3 096 520
- KR-A- 20130 082 957
- US-A1- 2011 246 252
- US-A1- 2021 086 647

## Description

### Domaine technique.

L'invention concerne un procédé et un système pour commander l'activation de bornes de recharges de véhicules électriques.

Le domaine de l'invention concerne notamment les méthodes permettant de gérer des bornes de recharges électriques.

### État de la technique.

Un service de partage de véhicule (en anglais « *car-sharing* ») ou véhicules en libre-service est un système dans lequel un gestionnaire (une société, une agence publique, une coopérative, une association, ou un groupe d'individus) met à la disposition de « clients » ou membres du service un ou plusieurs véhicules (ci-après « flotte de véhicules »). Plutôt que de disposer d'un véhicule personnel, l'utilisateur du service dispose d'un véhicule qu'il ne paye que pour la durée de son besoin. En d'autres termes, lorsqu'un utilisateur utilise un véhicule partagé, il est facturé d'un certain montant. Le montant facturé dépendant généralement du nombre de kilomètres parcourus et/ou du temps d'utilisation du véhicule et/ou du modèle ou type de véhicule. Le reste du temps, le véhicule est destiné à être utilisé par d'autres membres.

Un des avantages des véhicules partagés réside dans le fait qu'un utilisateur peut libérer son véhicule où il le souhaite dans une zone géographique déterminée (par exemple une ville). Toutefois, la position de ces véhicules n'est pas figée dans le temps, mais mouvante (d'où le terme anglais de « free-floating »), de sorte qu'il est difficile de prédire à l'avance leur emplacement et le temps d'attente pendant lequel ils resteront libres (c'est-à-dire pas réservés par les utilisateurs).

Tout ou partie des véhicules partagés d'une flotte peuvent être des véhicules électriques, c'est-à-dire des véhicules comportant un moteur électrique alimenté par une batterie électrique rechargeable (voiture, camion ou moto électrique, vélo électrique, planche à roulettes électrique, trottinette électrique, etc). Il est de plus en plus fréquent que ces véhicules électriques disposent de places publiques ou privées de stationnement équipées de bornes de recharge connectées au réseau électrique. Lorsqu'un utilisateur libère un véhicule sur l'une de ces places, il connecte ce véhicule à la borne qui est automatiquement activée pour recharger la batterie.

Le nombre de bornes rechargeant simultanément des véhicules peut être relativement élevé si la taille de la flotte est importante. Il en résulte que l'énergie électrique consommée simultanément par l'ensemble de ces bornes peut être importante, et provoquer une pointe de consommation électrique sur le réseau électrique et/ou provoquer un déséquilibrage des conditions énergétiques parfois fluctuantes du réseau électrique.

L'invention vise à remédier cet état des choses. Aussi, un objectif de l'invention est de proposer un procédé permettant de commander intelligemment l'activation de bornes de recharge de véhicules électriques de façon à limiter ou atténuer les pointes de consommation électrique sur le réseau électrique et/ou pour mieux équilibrer les conditions énergétiques dudit réseau.

Les documents FR3096520 et US2021/086647 divulguent l'état de l'art en la matière.

### Présentation de l'invention.

La solution proposée par l'invention est un procédé pour commander l'activation de bornes de recharges de véhicules électriques, lesquelles bornes sont connectées à un réseau électrique sur lequel elles consomment de l'énergie électrique lorsqu'elles sont activées, lesquels véhicules appartiennent à une flotte de véhicules partagés, lesdits véhicules et lesdites bornes étant localisés dans une zone géographique définie, ledit procédé comportant les étapes suivantes :
a) mettre en oeuvre un processus informatique logique dans un calculateur, lequel processus est adapté pour calculer, pour chaque véhicule électrique de la flotte disponible à la réservation et connecté à une borne de recharge, un temps moyen d'attente entre deux réservations pendant lequel ledit véhicule ne sera pas réservé, lequel calcul est réalisé en exécutant une application informatique basée sur un modèle d'intelligence artificielle,
b) fournir les valeurs des temps moyens d'attente calculés à l'étape a) à une application informatique de gestion de bornes de recharge implémentée dans un serveur informatique, lesquelles valeurs sont utilisées comme données d'entrée de ladite application, les données de sortie de ladite application étant des requêtes d'activation des bornes de recharge,
c) transmettre les requêtes d'activation aux bornes de recharge auxquelles sont connectés les véhicules électriques de la flotte disponible à la réservation, la réception desdites requêtes déclenchant l'activation des bornes pour qu'elles rechargent de manière effective des batteries des véhicules auxquelles elles sont connectées, laquelle transmission est réalisée en priorisant lesdites requêtes en fonction des valeurs des temps moyens d'attente calculés à l'étape a), de sorte que lesdites bornes sont activées de manière échelonnée dans le temps pour réduire les pointes de consommation électrique sur le réseau électrique et/ou pour mieux équilibrer (ou influencer positivement l'équilibrage) les conditions énergétiques dudit réseau électrique.

Le temps moyen d'attente d'un véhicule entre deux réservations correspond au laps de temps estimé entre le moment où le véhicule est libéré par un premier utilisateur et le moment où ce même véhicule est à nouveau utilisé ou réservé par un second utilisateur. Selon l'invention, ce temps moyen d'attente est maintenant un paramètre pris en compte pour déclencher l'activation d'une borne de recharge. Ainsi, lorsqu'un utilisateur libère un véhicule électrique et qu'il la connecte à une borne de recharge, celle-ci n'est plus automatiquement activée. Son activation, et donc la recharge de la batterie du véhicule, peut être retardée en fonction du temps moyen d'attente calculé. Par exemple, un véhicule électrique est affecté d'un temps moyen d'attente de 5 heures, indique que ce véhicule a une probabilité élevée de ne pas être réservé pendant 5 heures. Il n'est donc pas nécessaire de recharger sa batterie dès l'instant où elle est connectée à la borne de recharge. Elle pourra au contraire être rechargée ultérieurement, par exemple après la recharge d'un véhicule électrique affecté d'un temps moyen d'attente de 30 minutes.

L'invention permet ainsi de prioriser la transmission des requêtes d'activation en fonction des valeurs des temps moyens d'attente calculés. Les bornes sont alors activées de manière échelonnée dans le temps, de sorte que les pointes de consommation électrique sur le réseau électrique sont réduites et/ou que les conditions énergétiques du réseau électrique sont mieux équilibrées. Au d'autres termes, les bornes de vont pas être activées de la même manière selon les temps moyens d'attente calculés. Ces temps moyens d'attente agissent directement sur le fonctionnement des bornes en discriminant leur activation ou leur désactivation, dans le but de mieux répartir dans le temps la consommation électrique sur le réseau électrique pour réduire les pointes de consommation et/ou dans le but de mieux équilibrer les conditions énergétiques dudit réseau électrique.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Selon un mode de réalisation, l'étape a) comprend les sous-étapes suivantes : - a1) calculer pour chaque véhicule de la flotte disponible à la réservation un temps moyen d'attente pendant lequel ledit véhicule ne sera pas réservé ; - a2) détecter le taux de charge de batterie de chaque véhicule électrique disponible à la réservation ; - a3) pour chaque véhicule électrique disponible à la réservation, pondérer le temps moyen d'attente calculé à l'étape a1) avec le taux de charge de batterie dudit véhicule de manière à obtenir un temps moyen d'attente corrigé dudit véhicule.
- Selon un mode de réalisation, la pondération de l'étape a3) est réalisée en divisant le temps moyen d'attente calculé à l'étape a1) par un coefficient k qui est fonction du taux de charge de batterie ou du niveau de remplissage du réservoir du véhicule concerné détecté à l'étape a2), avec 0≤k≤1.
- Selon un mode de réalisation, le procédé comporte les étapes suivantes : - préalablement à l'étape a), mettre en oeuvre un premier processus informatique logique dans un calculateur, lequel premier processus est adapté pour définir la zone géographique où sont localisés les véhicules de la flotte et pour opérer un maillage de ladite zone de façon à la diviser en sous-zones géographiques ; - exécuter l'étape a) en mettant en oeuvre un second processus informatique logique adapté pour calculer, dans chaque sous-zone géographique et pour chaque véhicule de la flotte disponible à la réservation dans la sous-zone concernée, un temps moyen d'attente pendant lequel ledit véhicule ne sera pas réservé.
- Selon un mode de réalisation, le calcul de l'étape a) est basé sur un algorithme d'apprentissage entraîné pour calculer de manière prédictive, à une date donnée et à un instant donné, et dans chaque sous-zone géographique, un temps moyen d'attente qui est affecté à chaque véhicule disponible à la réservation dans la sous-zone concernée.
- Selon un mode de réalisation, les données d'entrée d'apprentissage de l'algorithme d'apprentissage proviennent d'un historique de requêtes de réservation effectives de véhicules de la flotte, et de tout ou partie des données suivantes : la localisation des sous-zones géographiques depuis lesquelles des requêtes de réservation ont été émises au court des dernières X heures, avec X compris entre 1 et 168 ; la distance des sous-zones géographiques par rapport à un point prédéfini de la zone géographique ; pour chaque véhicule de la flotte auxquels sont affectés un statut « disponible à la réservation » ou un statut « indisponible à la réservation », les heures effectives auxquelles leur statut passe de « disponible à la réservation » à « indisponible à la réservation » et inversement ; des données climatologiques ; des données relatives à une date et heure d'évènements intervenus dans la zone géographique et/ou dans l'une de ses sous-zones ; le nombre d'utilisateurs ayant libéré des véhicules de la flotte au court des dernières Y heures, avec Y compris entre 1 et 168 dans chaque sous-zone géographique. Les données de sortie d'apprentissage sont les temps d'attente réels des véhicules de la flotte dans chaque sous-zone géographique.
- Selon le mode de réalisation du paragraphe précédent, au moment de l'exécution de l'étape a), les données d'entrée de l'algorithme d'apprentissage entraîné sont tout ou partie des données suivantes : l'identification d'une sous-zone géographique concernée ; la localisation des sous-zones géographiques depuis lesquelles des requêtes de réservation ont été émises au court des dernières X heures, avec X compris entre 1 et 168 ; la distance de la sous-zone géographique concernée par rapport à un point prédéfini de la zone géographique ; des données climatologiques dans la zone géographique et/ou dans la sous-zone géographique concernée ; des données relatives à l'heure d'évènements intervenus et/ou à intervenir à la date donnée, dans la zone géographique et/ou dans la sous-zone géographique concernée et/ou dans les autres sous-zones géographiques ; le nombre d'utilisateurs ayant libéré des véhicules de la flotte au court des dernières Y heures, avec Y compris entre 1 et 168 dans la sous-zone géographique concernée. La donnée de sortie de l'algorithme d'apprentissage entraîné est un temps moyen d'attente qui est affecté à chaque véhicule disponible à la réservation dans la sous-zone concernée.
- Selon un mode de réalisation, les données d'entrée d'apprentissage de l'algorithme d'apprentissage proviennent d'un historique de requêtes de réservation effectives de véhicules de la flotte, et de tout ou partie des données suivantes : le type et le modèle chaque véhicule de la flotte ; la localisation des véhicules de la flotte au moment de leur réservation ; la distance des véhicules de la flotte au moment de leur réservation par rapport à un point prédéfini de la zone géographique ; pour chaque véhicule de la flotte auxquels sont affectés un statut « disponible à la réservation » ou un statut « indisponible à la réservation », les heures effectives auxquelles leur statut est passé de « disponible à la réservation » à « indisponible à la réservation » et inversement ; des données climatologiques ; des données relatives à la date et l'heure d'évènements intervenus dans la zone géographique et/ou dans l'une de ses sous-zones géographiques ; le nombre d'utilisateurs ayant libéré des véhicules de la flotte au court des dernières Y heures, avec Y compris entre 1 et 168 dans chaque sous-zone géographique. Les données de sortie d'apprentissage sont les temps d'attente réels des véhicules de la flotte.
- Selon le mode de réalisation du paragraphe précédent, au moment de l'exécution de l'étape a), les données d'entrée de l'algorithme d'apprentissage entraîné sont tout ou partie des données suivantes : l'identification d'un véhicule concerné de la flotte ; la localisation du véhicule concerné au moment du calcul ; pour le véhicule concerné, les heures effectives auxquelles son statut est passé de « disponible » à « indisponible » et inversement au court des dernières X heures, avec X compris entre 1 et 168 ; la distance séparant le véhicule concerné d'un point prédéfini de la zone géographique au moment du calcul ; des données climatologiques dans la zone géographique et/ou dans une sous-zone géographique concernée ; des données relatives à l'heure d'évènements intervenus et/ou à intervenir à la date donnée, dans la zone géographique et/ou dans les sous-zones géographiques ; le nombre d'utilisateurs ayant libéré des véhicules au court des dernières Y heures, avec Y compris entre 1 et 168, dans les différentes sous-zones géographiques. La donnée de sortie de l'algorithme d'apprentissage entraîné est un temps moyen d'attente propre au véhicule concerné.
- Selon un mode de réalisation, le temps moyen d'attente affecté à chaque véhicule de la flotte disponible à la réservation dans une sous-zone concernée (SGi) est calculé en moyennant les temps moyens d'attente propres aux véhicules disponibles à la réservation se trouvant dans ladite sous-zone.
- Selon un mode de réalisation, le procédé comprend une étape consistant à transmettre une requête de désactivation à une borne de recharge lorsque le taux de charge de batterie du véhicule à laquelle ladite borne est connectée atteint une valeur seuil prédéterminée.
- Selon un mode de réalisation, si un véhicule électrique a un taux de charge égal ou supérieur à une valeur seuil prédéterminée au moment où ledit véhicule se connecte à une borne de recharge, alors il n'y a pas de transmission de requête d'activation à ladite borne à laquelle ledit véhicule est connecté.

Un autre aspect de l'invention concerne un système adapté pour la mise en œuvre du procédé selon l'un des modes précédents, comportant un calculateur adapté pour exécuter les étapes dudit procédé.

Encore un autre aspect de l'invention concerne un produit programme d'ordinateur comprenant des instructions de code pour l'exécution d'au moins les étapes a) et b) du procédé, lorsqu'il est exécuté par un calculateur.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] illustre un premier exemple de division d'une zone géographique en sous-zones géographiques.
[Fig. 2] illustre un deuxième exemple de division d'une zone géographique en sous-zones géographiques.
[Fig. 3] illustre un troisième exemple de division d'une zone géographique en sous-zones géographiques.
[Fig. 4] schématise des données d'entrée et de sortie d'un modèle entraîné d'intelligence artificielle, utilisé dans l'invention.
[Fig. 5] schématise des données d'entrée et de sortie d'un autre modèle entraîné d'intelligence artificielle, utilisé dans l'invention.
[Fig. 6] illustre la répartition des véhicules d'une flotte dans des sous-zones géographiques.
[Fig. 7] représente un synoptique des principales étapes d'un procédé selon l'invention.
[Fig. 8] schématise un système convenant à la mise en œuvre de l'invention.
[Fig. 9] illustre un exemple de la variation du temps moyen d'attente sur une journée.
[Fig. 10a], [Fig. 10b], [Fig. 10c] illustrent la répartition des véhicules d'une flotte et d'opérateurs dans des sous-zones géographiques.
[Fig. 11] illustre un véhicule électrique connecté à une borne de recharge.

### Description des modes de réalisation.

Le procédé et le système objets de l'invention engendrent des manipulations d'éléments physiques, notamment des signaux (électriques ou magnétiques) et des données numériques, capables d'être stockés, transférés, combinés, comparés, ..., et permettant d'aboutir à un résultat souhaité.

L'invention met en œuvre une ou plusieurs applications informatiques exécutées par des équipements ou serveur informatique. Par souci de clarté, il faut comprendre au sens de l'invention que « *un équipement ou serveur fait quelque chose* » signifie « *l'application informatique exécutée par un calculateur ou une unité de traitement de l'équipement ou du serveur fait quelque chose ».* Tout comme « *l'application informatique fait quelque chose* » signifie « *l'application informatique exécutée par le calculateur l'unité de traitement de l'équipement ou du serveur fait quelque chose ».*

Encore par souci de clarté, la présente invention fait référence à un ou plusieurs « *processus informatiques logiques ».* Ces derniers correspondent aux actions ou résultats obtenus par l'exécution d'instructions d'une ou plusieurs applications informatiques. Aussi, il faut également comprendre au sens de l'invention que « *un processus informatique logique est adapté pour faire quelque chose* » signifie « *les instructions d'une application informatique exécutées par un calculateur ou une unité de traitement font quelque chose ».*

Encore par souci de clarté, les précisions suivantes sont apportées à certains termes utilisés dans la description et les revendications :
- « *Ressource informatique* » peut être compris de façon non limitative comme : composant, matériel, logiciel, fichier, connexion à un réseau informatique, quantité de mémoire RAM, espace de disque dur, bande passante, vitesse de processeur, nombre de CPU, etc.
- *« Serveur informatique* » peut être compris de façon non limitative comme : dispositif informatique (matériel ou logiciel) comportant des ressources informatiques pour réaliser les fonctions d'un serveur et qui offre des services, ordinateur, pluralité d'ordinateurs, serveur virtuel sur internet, serveur virtuel sur Cloud, serveur virtuel sur une plate-forme, serveur virtuel sur une infrastructure locale, réseaux de serveurs, cluster, nœud, ferme de serveurs, ferme de nœuds, etc.
- « Requête » désigne un ordre d'exécution pouvant suivre un protocole de communication et comprenant des paramètres en entrée (question, informations, instructions ...) et éventuellement des paramètres en retour (réponse, information, ...), pouvant se présenter dans un format lié au protocole employé.
- *« Unité de traitement »* peut être compris de façon non limitative comme : processeur, microprocesseurs, CPU (pour Central Processing Unit), etc.
- *« Application informatique »* peut être comprise comme : logiciel, programme informatique, micros-programme informatique, lignes de codes exécutables, software, etc.
- « *Réseau de données »* peut être compris de façon non limitative comme : réseau internet, réseau cellulaire, réseau satellite, etc. C'est un ensemble d'équipements informatiques reliés entre eux pour échanger, de manière sécurisée ou non, des informations et/ou des données selon un protocole de communication (ISDN, Ethernet, ATM, IP, CLNP, TCP, HTTP, ...).
- « *Base de données* » peut être comprise de façon non limitative comme un ensemble structuré et organisé de données enregistrées sur des supports accessibles par des équipements informatiques et pouvant être interrogées, lues et mises à jour. Des données peuvent y être insérées, récupérées, modifiées et/ou détruites. La gestion et l'accès à la base de données peuvent être assurés par un ensemble d'applications informatiques qui constituent un système de gestion de base de données (SGBD).
- *« Service »* peut être compris de façon non limitative comme l'ensemble des fonctionnalités proposé et assuré par un serveur et/ou par au moins un équipement informatique. Le service peut comprendre par exemple, les fonctionnalités suivantes : réservation d'un véhicule, localisation (réelle et/ou estimée) d'un véhicule, verrouillage/déverrouillage d'un véhicule, etc.
- *« Véhicule partagé* » peut être compris de façon non limitative comme un véhicule de location ou un véhicule en libre-service (en anglais « *car sharing »*) mis à la disposition de « clients » ou membres. Le véhicule peut être : une voiture autonome (apte à rouler sur route, sans intervention d'un conducteur), une voiture ou un camion (moteur thermique et/ou électrique), un deux-roues motorisé (moteur thermique et/ou électrique), un vélo (classique ou avec assistance électrique), une trottinette (classique ou avec assistance électrique), une planche à roulettes, un monocycle électrique, un gyropode, un bateau, etc. Lorsqu'un utilisateur utilise un véhicule partagé, il peut être facturé d'un certain montant dépendant généralement du nombre de kilomètres parcourus et/ou du temps d'utilisation du véhicule et/ou du modèle ou type de véhicule.
- *« Véhicule électrique »* peut être compris de façon non limitative comme un véhicule comportant un moteur électrique alimenté par une batterie électrique rechargeable. Ce moteur électrique sert à propulser le véhicule (ex : voiture, camion, moto, monocycle, gyropode, bateau, ...) ou est une aide à la propulsion (ex : véhicule hybride à moteur thermique et à moteur électrique, vélo à assistance électrique, une trottinette à assistance électrique, planche à roulettes à assistance électrique, ...). Par « *batterie électrique rechargeable* » on entend une seule batterie ou un pack de plusieurs batteries.
- Tel qu'utilisé ici, sauf indication contraire, l'utilisation des adjectifs ordinaux « premier », « deuxième », etc., pour décrire un objet indique simplement que différentes occurrences d'objets similaires sont mentionnées et n'implique pas que les objets ainsi décrits doivent être dans une séquence donnée, que ce soit dans le temps, dans l'espace, dans un classement ou de toute autre manière.

### Maillage d'une zone géographique

Selon une caractéristique avantageuse de l'invention, un premier processus informatique logique est mis en œuvre dans un calculateur 35, lequel premier processus est adapté pour définir une zone géographique G où sont localisés les véhicules de la flotte et pour opérer un maillage de ladite zone de façon à la diviser en sous-zones géographiques.

La zone géographique G peut consister en une région géographique, par exemple une ville (prédéfinie dans une base de données et correspondant à une région définie par un ou plusieurs codes postaux ou par une région délimitée par des rues et définissant des quartiers connus), une zone définissant un cercle, un carré, un rectangle ayant pour centre une position géographique spécifique (ex : un centre-ville) et un rayon, un diamètre ou une diagonale de longueur prédéfinie (ex : rayon de 20 Km).

Selon un mode de réalisation, la zone géographique G est définie par un ensemble de données numériques. Ces données peuvent par exemple provenir de sources cartographiques publiques et privées et/ou de données satellites. Elles peuvent être téléchargées depuis une base de données dédiée telle que OpenStreetMap ^{®}. Ces données numériques sont ensuite enregistrées dans une zone mémoire du serveur de gestion S.

On opère un maillage de la zone géographique de manière à la diviser en sous-zones géographiques. Selon un mode de réalisation, cette opération est réalisée automatiquement par le calculateur 35 du serveur de gestion S où sont enregistrées les données de la zone géographique G. Par exemple, le calculateur 35 met en oeuvre le premier processus informatique logique qui est configuré pour diviser automatiquement toute zone géographique en sous-zones de 1 km² chacune. Le premier processus informatique logique peut également être configuré pour diviser automatiquement toute zone géographique en sous-zones annulaires concentriques dont le centre commun est une position géographique spécifique et dont les rayons sont incrémentés de 1 km. Selon un autre mode de réalisation, la division de la zone géographique G est réalisée de manière discrétionnaire depuis le calculateur 35. Par exemple, pour une première zone géographique, la division est faite par arrondissements (chaque arrondissement d'une ville correspondant à une sous-zone), pour une deuxième zone géographique, la division est faite par quartiers (chaque quartier correspondant à une sous-zone), pour une troisième zone géographique, la division est faite par rue (chaque rue correspondant à une sous-zone), etc. Un logiciel de maillage (par exemple Gmsh ^{®}) est préférentiellement exécuté par le calculateur 35 pour réaliser la subdivision de la zone géographique G.

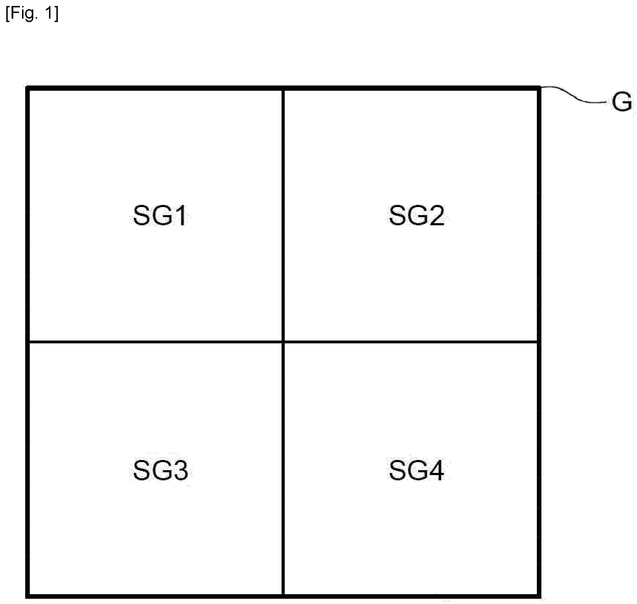

Sur la figure 1, la zone géographique G est en forme de carré divisé en quatre sous-zones SG1-SG4. Un nombre plus ou moins important de sous-zones peuvent être prévues (par exemple de 2 à 100 sous-zones). Sur la figure 1, ces sous-zones sont de taille identique, mais peuvent être de tailles différentes. Également, les sous-zones SG1-SG4 sont de forme carrée, mais peuvent avoir une autre forme (rectangulaire, polygonale, ..)

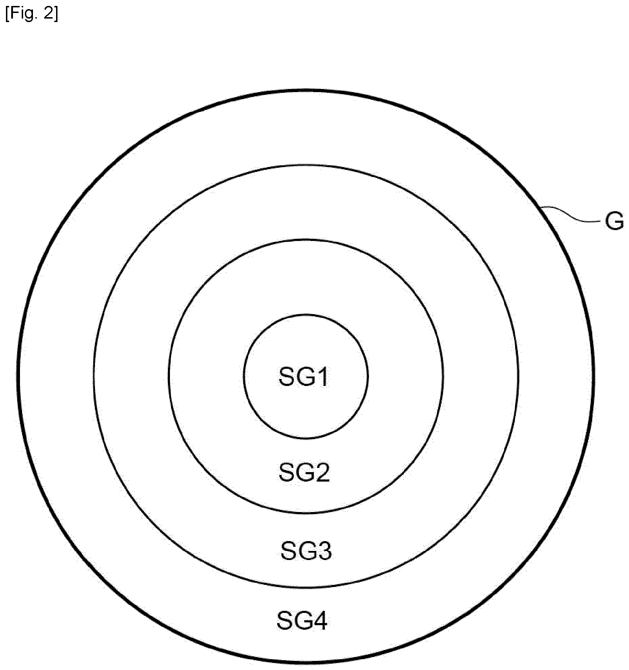

Sur la figure 2, la zone géographique G est en forme disque et les sous-zones SG1-SG4 en forme d'anneaux concentriques. Le centre de la zone G et des sous-zones SG1-SG4 peut par exemple correspondre à un point singulier, tel que le centre d'une ville, une zone commerciale, un aéroport, etc. Les rayons des sous-zones SG1-SG4 peuvent être incrémentés d'une distance régulière ou irrégulière.

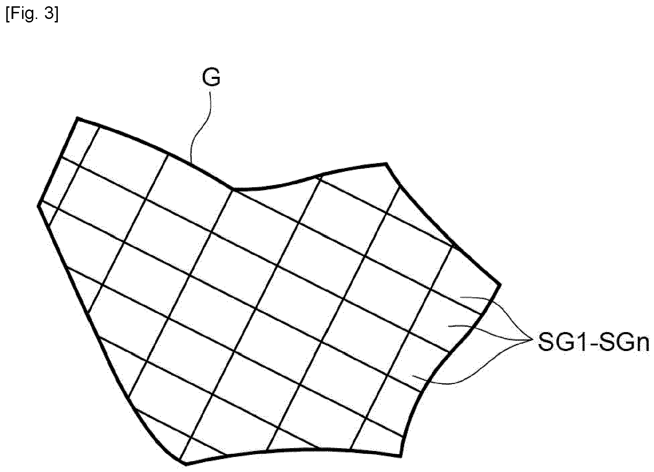

Sur la figure 3, la zone géographique G est en forme de polygone et les sous-zones SG1-SGn en forme de mailles polygonales. Selon un mode de réalisation, le nombre n, la forme et/ou la taille des mailles SG1-SGn sont définis automatiquement par le serveur en fonction de la forme et/ou de la taille de la zone G. Selon un autre mode de réalisation, le nombre n, la forme et/ou la taille des mailles SG1-SGn sont paramétrés de manière singulière depuis le serveur.

Comme expliqué plus avant dans la description, la division d'une zone géographique en sous-zones géographiques permet d'évaluer plus précisément la répartition des véhicules de la flotte dans ladite zone géographique, et de calculer, via un second processus informatique, les temps d'attente des véhicules entre deux réservations. Ces temps d'attente calculés sont ainsi discriminés en fonction des sous-zones géographiques ce qui permet d'obtenir des valeurs plus précises et plus fiables. Par exemple, un temps moyen d'attente de 5 heures dans une première sous-zone SG1, indique que statistiquement, un véhicule libre se trouvant dans cette première sous-zone a une probabilité élevée de ne pas être réservé pendant 5 heures. Et avec un temps moyen d'attente de 15 minutes dans une deuxième sous-zone SG2, un véhicule libre se trouvant dans cette deuxième sous-zone a une probabilité élevée d'être réservé dans un temps relativement court. Le serveur de gestion peut alors répartir et/ou cibler les requêtes en prenant en compte les valeurs calculées des temps moyens d'attente.

Selon un premier exemple illustratif, la flotte présente à un instant T cent véhicules électriques chacun connecté à une borne de recharge. Cinquante de ces véhicules sont situés dans une première sous-zone SG1 dont le temps moyen d'attente est de 5 heures. Les cinquante autres véhicules sont situés dans une deuxième sous-zone SG2 dont le temps moyen d'attente est de 15 minutes. Selon les techniques habituelles de l'art antérieur, le serveur doit générer et transmettre simultanément à l'instant T, cent requêtes pour activer les cent bornes de recharges. Grâce à l'invention, le serveur peut ne générer et transmettre à l'instant T, que cinquante requêtes pour activer les bornes connectées aux cinquante véhicules électriques de la flotte se trouvant dans la deuxième sous-zone SG2. Les autres requêtes destinées aux bornes connectées aux 50 autres véhicules se trouvant dans la première sous-zone SG1 pourront être transmises ultérieurement, de manière échelonnée dans le temps, de sorte que les ressources de communication nécessaires à la transmission de l'ensemble des requêtes et/ou les ressources informatiques mobilisées par le serveur de gestion seront réduites (le débit initial de cent requêtes par unité de temps T étant réduit à cinquante requêtes par unité de temps T).

Toutefois, ce maillage de la zone G en sous-zones géographiques n'est pas essentiel pour la mise en œuvre de l'invention. Les méthodes de calcul et/ou de correction de temps moyens d'attente décrites plus avant dans la description, donnent en effet de très bons résultats même sans cette étape de division en sous-zones géographiques. En outre, les modes de réalisations décrits plus avant dans la description s'appliquent également au cas où la zone G n'est pas divisée en sous-zones. On peut alors considérer la zone G comme une seule et même sous-zone.

### Statuts des véhicules.

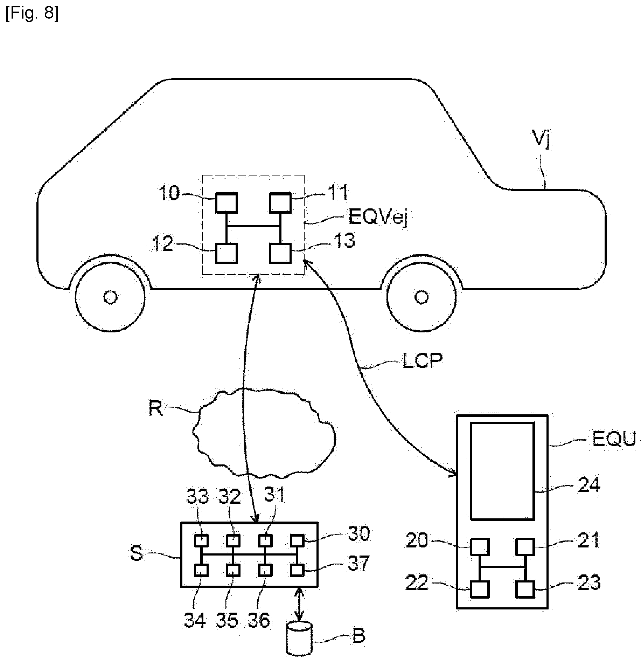

En se rapportant à la figure 8, chaque véhicule Vj intègre préférentiellement un équipement informatique embarqué EQVej. Cet équipement peut par exemple faire partie d'un boîtier télématique permettant au véhicule d'échanger avec le serveur de gestion distant S des informations telles que la position géographique, la vitesse, l'état de capteurs embarqués (taux de charge de batterie, niveau de carburant dans le réservoir, pression de pneus, état des feux de croisement ou autres éclairages, état d'une chaine de vélo, ...), etc. Cet échange se fait au travers d'un réseau de données R. L'équipement informatique EQVej peut également être un équipement dédié, indépendant du boîtier télématique.

Chaque équipement embarqué EQVej comprend, entre autres ressources informatiques, une unité de traitement 10, un émetteur/récepteur de signaux 11, et une ou plusieurs mémoires 12 dans laquelle est enregistrée une application informatique. L'équipement embarqué EQVej comprend également une interface de communication 13. Ces différents éléments sont connectés au moins à l'unité de traitement 10 par un bus de communication.

Les instructions de l'application informatique enregistrée dans la mémoire 12, lorsqu'elles sont exécutées par l'unité de traitement 10, permettent de réaliser des étapes du procédé qui sont décrites plus avant dans la description. La mémoire 12 est également adaptée pour enregistrer un certain nombre d'autres d'informations.

L'émetteur/récepteur 11 est adapté pour échanger des signaux, via une liaison sans fil de courte portée LCP, avec un terminal utilisateur EQU décrit plus avant dans la description et/ou avec les équipements embarqués des autres véhicules. La liaison LCP a par exemple une portée inférieure ou égale à 100 mètres. Les signaux échangés sont préférentiellement des signaux infrarouges ou des signaux radiofréquences. La liaison LCP utilise préférentiellement un protocole de communication de la famille suivante : Bluetooth^{®}, Wifi^{®}, Z-Wave^{®}, ANT, ZIGBEE^{®}, Infrarouge.

L'interface de communication 13, par exemple GSM, 3G, 4G ou Wifi^{®}, est adapté pour établir une liaison de communication sans fil avec une interface de communication du serveur S, au travers du réseau de données R.

Chaque véhicule Vj est associé à un numéro d'identification unique (par exemple un code numérique ou un code alphanumérique) enregistré dans une base de données B accessible au serveur S.

À un instant donné, les véhicules Vj peuvent être :
- avec un statut dit « disponible » à la réservation : le véhicule est stationné (garé) et/ou non réservé,
- avec un statut dit « indisponible » à la réservation : soit le véhicule est stationné, mais déjà réservé par un utilisateur (statut « indisponible-réservé »), soit le véhicule est en cours de fonctionnement (statut « indisponible-en fonctionnement »).

L'utilisateur dispose d'au moins un terminal mobile EQU. Ce dernier consiste préférentiellement en un téléphone intelligent (Smartphone), une tablette numérique, un ordinateur portable, etc. Sur la figure 8, le terminal EQU intègre une unité de traitement 20, un émetteur/récepteur de signaux 21 et une ou plusieurs mémoires 22 dans laquelle est enregistrée une application informatique pour la mise en œuvre du service (« application-service »), une interface de communication 23 et une interface graphique 24 du type écran tactile. Ces différents éléments sont connectés au moins à l'unité de traitement 20 par un bus de communication. Il comprend également les ressources informatiques permettant de réaliser des étapes du procédé de l'invention. L'émetteur/récepteur 21 est similaire à celui des équipements embarqués EQVej. L'interface de communication 23, par exemple GSM, 3G, 4G ou Wifi^{®}, est adapté pour établir une liaison de communication sans fil avec une interface de communication du serveur distant S, au travers du réseau de données R.

Selon un mode de réalisation, pour télécharger l'application-service, et avoir les droits d'accès au service, l'utilisateur U doit préalablement s'enregistrer auprès d'un serveur de gestion de droits qui peut être ou non le serveur distant précité. Selon un mode de réalisation, l'enregistrement de l'utilisateur U est réalisé auprès d'un service web du serveur distant S associé au service. L'enregistrement comporte l'enregistrement d'un identifiant utilisateur et/ou d'un identifiant du terminal EQU. Il peut s'agir d'un port, d'une adresse IP, d'une adresse MAC ou toute autre adresse ou combinaison permettant d'identifier le terminal EQU. Selon un mode de réalisation, l'utilisateur est préinscrit à partir d'un logiciel et est connu du fait qu'un identifiant est enregistré dans la base de données B.

Sur la figure 8, le serveur S intègre une unité de traitement 30, une ou plusieurs mémoires 31, une interface de communication 32, un module de localisation 33, un module de calcul d'itinéraire 34, le calculateur 35, un générateur de carte numérique 36, un module traitement informatique 37, qui sont mutuellement connectées via un bus. Une ou plusieurs applications informatiques sont enregistrées dans la ou les mémoires 31 et dont les instructions, lorsqu'elles sont exécutées par l'unité de traitement 30, permettent de réaliser les fonctionnalités décrites plus avant dans la description.

Les modules de localisation 33, de calcul d'itinéraire 34, de calcul 35, de traitement 37 et le générateur de carte 36, sont des composants matériels et/ou logiciels du serveur S.

Le serveur S met régulièrement à jour, préférentiellement en temps réel, la base de données B. Cette base de données regroupe notamment : l'identifiant de chaque véhicule Vi, leur statut (« disponible » ou « indisponible »), leur position géographique. D'autres informations et/ou données peuvent être regroupées dans la base de données B, le cas échéant, notamment les taux de charge des batteries des véhicules à moteur électrique ou les niveaux de remplissage des réservoirs de carburant des véhicules à moteur thermique, l'état de leurs capteurs, etc. La base de données B peut être enregistrée dans une zone mémoire du serveur S ou être distante dudit serveur.

L'information sur le statut « disponible » ou « indisponible » d'un véhicule Vj est transmise au serveur S en temps réel ou à des intervalles de temps prédéfinis (par exemple toutes les 5 minutes). Cette information peut être transmise au serveur S, par exemple depuis l'équipement embarqué EQVej du véhicule Vj suite à une détection d'un évènement. Cet évènement est par exemple généré par une action de l'utilisateur sur une commande spécifique aménagée sur le tableau de bord du véhicule Vj. Cette commande peut être actionnée lorsqu'un utilisateur a stationné son véhicule et libéré le véhicule. Le statut passe alors de « indisponible » à « disponible ». Cet évènement peut également être généré automatiquement lorsque le véhicule reste inactif pendant une certaine période de temps, par exemple 15 minutes.

Lorsque le serveur S reçoit une requête de réservation de la part de l'utilisateur et qu'il peut faire droit à cette requête (c'est-à-dire qu'un véhicule est disponible à la réservation), ledit serveur fait passer le statut d'un véhicule de « disponible » à « indisponible ». Cette requête de réservation est préférentiellement générée via le terminal mobile utilisateur EQU.

Les positions géographiques des véhicules Vj peuvent être obtenues par satellite (système GPS ou Galileo) ou par un système de triangulation (par exemple, un système utilisant les cellules d'un réseau 4G) ou par une combinaison des deux systèmes de localisation. L'équipement EQVej d'un véhicule Vj comporte avantageusement un composant permettant d'obtenir une information de géo-localisation, par exemple un composant GPS, qui peut être récupérée par le module de localisation 33 du serveur S. Le module de localisation 33 peut récupérer automatiquement cette information en interrogeant en temps réel ou à intervalles de temps régulier (par exemple toutes les 5 minutes), les équipements EQVej. Les équipements EQVej peuvent également transmettre automatiquement cette information au module de localisation 33 (sans répondre à une requête d'interrogation), en temps réel ou à intervalles de temps régulier (par exemple toutes les 5 minutes). La position géographique de chaque véhicule Vj est alors enregistrée dans la base de données B.

Selon une alternative, la position géographique d'un véhicule Vj peut correspondre à la position géographique (obtenue par satellite et/ou par un système de triangulation) du terminal mobile EQU de l'utilisateur. Cette position géographique est automatiquement récupérée par le module de localisation 33 ou transmise à celui-ci. La position géographique du terminal EQU peut être obtenue de la même façon. Par satellite et/ou ou par un système de triangulation. Le terminal EQU comporte avantageusement un composant, par exemple un composant GPS, permettant d'obtenir une information de géo-localisation qui peut être automatiquement récupérée par le module de localisation 33 ou transmise à celui-ci.

Les informations concernant le taux de charge de batterie ou le niveau de remplissage du réservoir d'un véhicule Vj est également transmise au serveur S en temps réel ou à des intervalles de temps prédéfinis (par exemple toutes les 5 minutes) ou lorsque son statut passe de « indisponible » à « disponible ». Ces informations sont transmises au serveur S depuis l'équipement embarqué EQVej du véhicule Vj.

### Notion de temps moyen d'attente

L'invention introduit la notion de « *temps moyen d'attente »* qui correspond à une période temporelle estimée pendant lequel un véhicule de la flotte (électrique ou non électrique) ayant un statut « disponible » ne sera pas réservé. En d'autres termes, le temps moyen d'attente correspond à l'intervalle de temps pendant lequel le statut du véhicule reste à « disponible ». Par exemple, un temps moyen d'attente de 1 heure indique que statistiquement, un véhicule qui vient d'être libéré et dont le statut passe de « indisponible » à « disponible » a une probabilité élevée de ne pas être réservé (i.e. le statut reste à « disponible » et ne passe pas à « indisponible ») pendant 1 heure. Cette probabilité est avantageusement supérieure à 50% et préférentiellement supérieure à 90%.

Il convient de rappeler que la gestion d'une flotte nécessite d'opérer diverses actions sur les véhicules telles que leur nettoyage, la recharge de leur batterie (pour les véhicules électriques) ou le remplissage de leur réservoir en carburant (pour les véhicules à moteur thermique), leur regroupement dans une zone définie, des réparations et/ou des entretiens, etc.

Ces différentes actions sont généralement supervisées par un serveur informatique de gestion. Ce serveur de gestion peut analyser les positions géographiques, l'état et/ou les caractéristiques de fonctionnement de chaque véhicule de la flotte. En fonction de ces données, une application informatique de gestion de flotte qui est implémentée dans le serveur, génère des requêtes d'action qui doivent être exécutées sur tout ou partie des véhicules de la flotte. Ces requêtes d'action sont ensuite transmises, au travers d'un réseau de données, à des d'équipements informatiques embarqués dans les véhicules et/ou à destination de terminaux mobiles d'opérateurs en charge d'exécuter ces actions.

Ces temps d'attente entre deux réservations ne sont généralement pas des variables prises en compte par le serveur de gestion. Il en résulte que les flux de véhicules sont mal compris et que les prises de décision du serveur de gestion sont limitées. Ces carences impliquent notamment que des requêtes d'actions sont transmises à certains véhicules alors les actions correspondantes ne sont pas nécessaires au moment où elles sont transmises pour assurer une mise en état opérationnelle optimale desdits véhicules au moment de leur utilisation. Cela représente un gaspillage non seulement des ressources informatiques du serveur de gestion, mais encore de ressources de communication nécessaire à la transmission de ces requêtes d'action. En outre, il n'existe pas à ce jour de technique simple à mettre en œuvre pour calculer de manière précise et fiable des temps d'attente d'un véhicule entre deux réservations.

La prise en compte des temps moyens d'attente entre deux réservations de véhicules permet de pallier à cet état des choses. La connaissance des temps moyens d'attente permet de mieux prévoir les flux des véhicules et permet d'augmenter la capacité décisionnelle du serveur de gestion. Celui-ci peut notamment cibler les véhicules dont la probabilité d'être utilisés - ou inutilisés - est en adéquation avec le type d'action à exécuter, notamment la recharge de batterie. Le serveur de gestion peut alors mieux répartir dans le temps la transmission des requêtes d'action, de sorte que les ressources de communication nécessaire à la transmission desdites requêtes sont réduites. Également, les ressources informatiques mobilisées par le serveur sont mieux utilisées et moins sollicitées. Ce ciblage des véhicules permet en outre de maintenir à un niveau élevé la probabilité qu'un utilisateur trouve un véhicule partagé parfaitement opérationnel au moment de son utilisation.

Selon un mode de réalisation, les temps moyens d'attente sont calculés par le calculateur 35 du serveur S (ou par un autre calculateur), en mettant en œuvre un second processus informatique logique. Ce calcul est effectué sans distinction du mode de propulsion des véhicules (électrique, thermique, à pédales, sans motorisation, ...). Ce calcul peut être effectué une fréquence déterminée et/ou paramétrée, avantageusement une ou plusieurs fois par jour, par exemple dès que le statut d'un véhicule passe de « indisponible » à « disponible ».

### Premier mode de calcul du temps moyen d'attente

Selon un premier mode de calcul, le calculateur 35 prend en compte l'historique des requêtes de réservation effectives de véhicules pour en déduire un temps moyen d'attente qui est affecté à chaque véhicule ayant un statut « disponible ». Par exemple, s'il y a en moyenne 48 requêtes de réservation par jour (24 heures) dans la zone G, le temps moyen d'attente sera de 30 minutes heures (24/30=0,5). Un véhicule qui sera libéré (i.e dont le statut passe de « indisponible » à « disponible ») dans zone G attendra en moyenne 30 minutes avant d'être à nouveau réservé et utilisé.

Dans le cas où la zone G est divisée en sous-zone, l'historique des requêtes de réservation effectives de véhicules est pris en compte dans la sous-zone concernée. Par exemple, s'il y a en moyenne 4 requêtes de réservation par jour (24 heures) dans la sous-zone SG1, le temps moyen d'attente sera de 6 heures (24/4=6). Un véhicule qui sera libéré (i.e dont le statut passe de « indisponible » à « disponible ») dans la sous-zone SG1, attendra en moyenne 6 heures avant d'être à nouveau réservé et utilisé. Selon un autre exemple, s'il y a en moyenne 12 requêtes de réservation par jour dans la sous-zone SG2, le temps moyen d'attente sera de 2 heures (24/12=2). Un véhicule qui est libéré dans la sous-zone SG2, attendra en moyenne 2 heures avant d'être à nouveau réservé et utilisé.

Les requêtes prises en compte pour le calcul peuvent être celles de l'heure, de la veille, de la semaine, du mois, de l'année précédant ledit calcul. Il s'agit préférentiellement de toutes les requêtes enregistrées dans le serveur S au moment du calcul. En effet, plus le nombre de données analysées est élevé, meilleure sera la probabilité que le temps moyen d'attente calculé converge vers le temps réel d'attente. Le temps moyen d'attente ainsi calculé est constant et ne varie pas au cours d'une journée.

### Deuxième mode de calcul du temps moyen d'attente

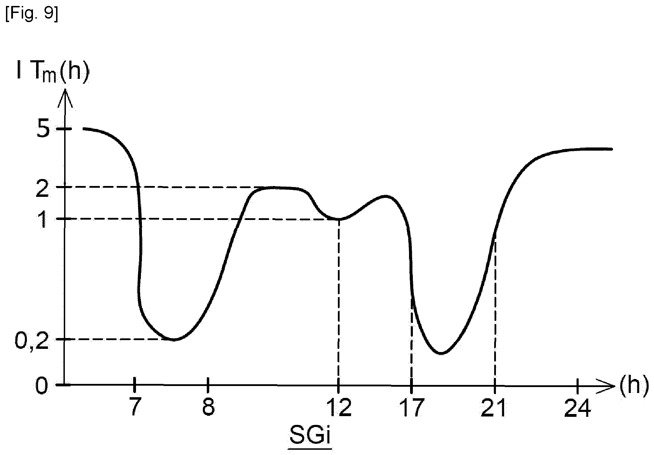

Le premier mode de calcul permet d'aboutir à une valeur acceptable du temps moyen d'attente. Toutefois, il apparaît que ce temps moyen d'attente n'est pas constant, mais varie au cours d'une journée. La figure 9 illustre à titre d'exemple explicatif seulement, une telle variation. Par exemple, dans la sous-zone SGi, le temps moyen d'attente ITm-SGi est minimal (environ 15 minutes) entre 7h et 8h (typiquement les heures de départ au travail) et entre 17h et 21h (typiquement les heures de retour du travail). Et il est maximal avant 7h et après 21h (environ 5 heures). Entre 8h et 17h, le temps moyen d'attente ITm-SGi est compris entre 1 heure et 2 heures. En outre, pour une même sous-zone, ces variations du temps moyen d'attente ne sont pas les mêmes d'un jour à l'autre. Par exemple, la courbe d'un dimanche ou d'un jour férié diffère de celle d'un jour travaillé de la semaine. Il en est de même pendant des périodes de vacances, ou lorsqu'un évènement particulier a lieu dans une sous-zone (par exemple un concert ou un match de football), les requêtes de réservation dans la sous-zone concernée et/ou dans les autres sous-zones pouvant augmentées. Les données climatologiques (température, précipitations, pollution, ...) peuvent également influencer la valeur du temps d'attente.

Pour améliorer la précision du calcul du temps moyen d'attente ITm-SGi et pour se rapprocher au plus près de la valeur du temps réel d'attente, il apparaît donc avantageux d'analyser plus en détail les données historiques des requêtes de réservation effectives (les requêtes réellement reçues par le serveur) et de prendre en compte divers autres paramètres (date, heure, données climatologiques, évènements, ...). Aussi, selon un second mode de calcul, le calculateur 35 exécute une application informatique basée sur un modèle d'intelligence artificielle. Ce modèle est avantageusement basé sur un algorithme d'apprentissage, supervisé ou non supervisé. On peut notamment utiliser la méthode des k plus proches voisins (par exemple en implémentant un algorithme dédié accessible depuis la bibliothèque Python ^{®} Scikit Learn ^{®}), ou un réseau de neurones artificiels, par exemple le réseau ADALINE (Adaptive Linear Element) utilisant la méthode des moindres carrés et/ou une méthode statistique. On peut également utiliser un réseau bayésien qui est un modèle probabiliste représentant des variables aléatoires et leurs dépendances conditionnelles via un DAG (Directed Acyclic Graph) et des tables de probabilités. Il sert principalement à représenter une connaissance, donner une règle de décision, prévoir, et déterminer des hypothèses de causalité. L'homme du métier peut notamment se référer aux publications suivantes concernant les réseaux bayésiens : BRIDE, « Méthodes de construction de réseaux bayésiens », Université de Strasbourg, Aout 2016, pages 1-34 ; HECKERMAN, « A bayesian approach to learning causal network », MSR-TR-95-04, MicrosoftResearch, 1995 ; PEARL, « Probabilistic Reasoning in Intelligent Systems : Networks of Plausible Inference », Morgan Kaufmann Publishers, 1988.

Selon un mode de réalisation, l'algorithme d'apprentissage repose sur un raisonnement automatisé qui conduit à des déterminations probabilistes et/ou des déterminations fondées sur des statistiques. Le calculateur 35 peut ainsi définir le temps moyen d'attente dans chaque sous-zone géographique SG1-SG4 (ou plus globalement dans la zone G s'il n'y a pas de division en sous-zones), à une date donnée et à un instant donné, à partir d'un ensemble d'événements observés et/ou à partir de données d'événements observés.

Les données d'entrée d'apprentissage proviennent de l'historique des requêtes de réservation effectives reçues par le serveur S et archivées dans la base de données B (notamment : date, heure, identification de véhicule réservé), combiné à d'autres données enregistrées dans ladite base.

Les meilleurs résultats en termes de précision de calcul sont obtenus lorsque ces autres données sont : la localisation des sous-zones géographiques SG1-SG4 depuis lesquelles des requêtes de réservation ont été émises au court des dernières X heures (avec X par exemple compris entre 1 et 168) ; la distance des sous-zones par rapport à un point prédéfini de la zone G (par exemple le centre-ville) ; pour chaque véhicule de la flotte, les heures effectives auxquelles leur statut passe de « disponible » à « indisponible » et inversement ; des données climatologiques (par exemple récupérées depuis des sites publics tels que https://donneespubliques.meteofrance.fr) ; des données relatives à la date et l'heure d'évènements (concerts, matchs de football, ...) intervenus dans la zone G et/ou dans l'une de ses sous-zones ; le nombre d'utilisateurs ayant libéré des véhicules de la flotte au court des dernières Y heures (avec Y par exemple compris entre 1 et 168) dans chaque sous-zone ; etc. Tout ou partie de ces données d'entrées peuvent être utilisés. Les données de sortie d'apprentissage sont les temps d'attente réels des véhicules dans chaque sous-zone. L'apprentissage du modèle d'intelligence artificielle est effectué préalablement sur le serveur S ou sur un autre serveur. L'apprentissage est préférentiellement effectué de manière continue, pour améliorer la précision du modèle.

À l'issue de l'apprentissage, le modèle entraîné (ou algorithme d'apprentissage entraîné) est capable de calculer de manière prédictive, à une date D et à un instant T, le temps moyen d'attente dans chaque sous-zone géographique. En d'autres termes, le modèle entraîné calcul, à une date D et dans chaque sous-zone géographique, la variation du temps moyen d'attente, cette variation étant une courbe du type illustré sur la figure 9.

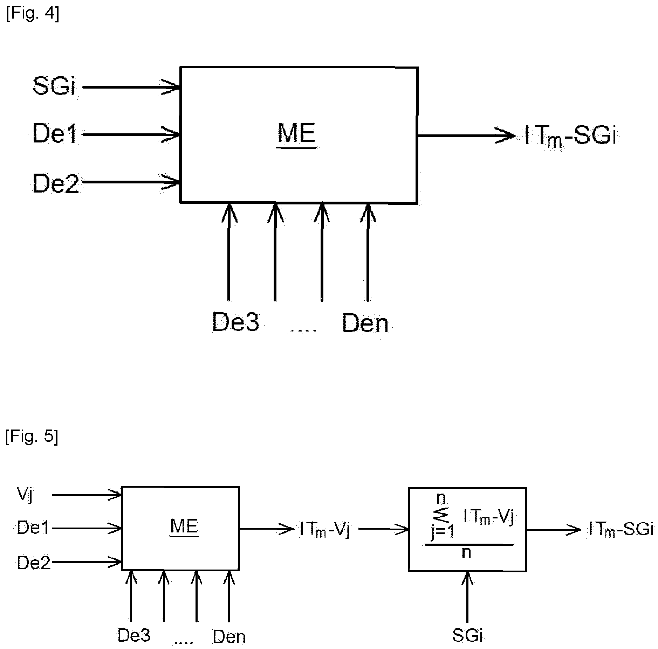

Selon un mode de réalisation illustré par la figure 4, au moment du calcul, les nouvelles données d'entrée De1-Den du modèle entraîné ME sont au moins l'une et préférentiellement l'ensemble des données suivantes : l'identification de la sous-zone concernée SGi ; la localisation des sous-zones depuis lesquelles des requêtes de réservation ont été émises au court des dernières X heures (avec X par exemple compris entre 1 et 168) ; la distance de la sous-zone concernée SGi par rapport à un point prédéfini de la zone G (par exemple le centre-ville) ; les données climatologiques dans la zone G et/ou dans la sous-zone concernée SGi (prévisions à Z heures, avec Z par exemple compris entre 24 et 168) ; des données relatives à l'heure d'évènements intervenus et/ou à intervenir à la date D, dans la zone G et/ou dans la sous-zone concernée SGi et/ou dans les autres sous-zones ; le nombre d'utilisateurs ayant libéré des véhicules de la flotte au court des dernières Y heures (avec Y compris entre 1 et 168) dans la sous-zone concernée. Ces données d'entrée donnent les meilleurs résultats en termes de précision de calcul. La donnée de sortie est le temps moyen d'attente ITm-SGi dans la sous-zone géographique concernée SGi qui est affecté à chaque véhicule ayant un statut « disponible » et qui est localisé dans ladite sous-zone.

Pour améliorer la précision, le calcul du temps moyen d'attente ITm-SGi peut être effectué plusieurs fois par jour. Par exemple, un premier calcul peut être fait entre 0h et 6h, un deuxième calcul entre 15h et 16h, et un troisième calcul entre 19h et 21h. On peut encore déclencher un calcul dès que le statut d'un véhicule passe de « indisponible » à « disponible ». Ces différents calculs permettent de corriger ou valider les calculs précédents. Le calcul du temps moyen d'attente peut toutefois être effectué une seule fois par jour (par exemple entre 0h et 6h), voire une fois par semaine, ou une fois par mois.

### Troisième mode de calcul du temps moyen d'attente

Un troisième mode de calcul est similaire au deuxième mode. Un temps moyen d'attente est toutefois d'abord calculé pour chaque véhicule, indépendamment de la sous-zone dans laquelle il est localisé.

Les données d'entrée d'apprentissage du modèle proviennent de l'historique des requêtes de réservation effectives reçues par le serveur S et archivées dans la base de données B (notamment : date, heure, identification de véhicule réservé), et d'autres données enregistrées dans ladite base.

Les meilleurs résultats en termes de précision de calcul sont obtenus lorsque ces autres données sont : le type et le modèle chaque véhicule de la flotte ; la localisation des véhicules de la flotte au moment de leur réservation ; la distance des véhicules de la flotte au moment de leur réservation par rapport à un point prédéfini de la zone G (par exemple le centre-ville) ; pour chaque véhicule de la flotte, les heures effectives auxquelles leur statut est passé de « disponible » à « indisponible » et inversement ; des données climatologiques (par exemple récupérées depuis des sites publics tels que https://donneespubliques.meteofrance.fr) ; des données relatives à la date et l'heure d'évènements (concerts, matchs de football, ...) intervenus dans la zone G et/ou dans l'une de ses sous-zones ; le nombre d'utilisateurs ayant libéré des véhicules de la flotte au court des dernières Y heures (avec Y par exemple compris entre 1 et 168) dans chaque sous-zone ; etc. Tout ou partie de ces données d'entrées peuvent être utilisés. Les données de sortie d'apprentissage sont les temps d'attente réels des véhicules de la flotte. L'apprentissage du modèle d'intelligence artificielle est effectué préalablement sur le serveur S ou sur un autre serveur. L'apprentissage est préférentiellement effectué de manière continue, pour améliorer la précision du modèle.

À l'issue de l'apprentissage, le modèle entraîné est capable de calculer de manière prédictive, à une date D et à un instant T, le temps moyen d'attente (donnée de sortie) propre à chaque véhicule Vj : ITm-Vj. En d'autres termes, le modèle entraîné calcul, à une date D et pour chaque véhicule, la variation du temps moyen d'attente, cette variation étant une courbe du type illustré sur la figure 9.

Selon un mode de réalisation illustré par la figure 5, au moment du calcul, les nouvelles données d'entrée De1-Den du modèle entraîné ME (ou algorithme d'apprentissage entraîné) sont au moins l'une et préférentiellement l'ensemble des données suivantes : l'identification du véhicule Vj concerné de la flotte ; la localisation du véhicule concerné au moment du calcul ; pour le véhicule concerné, les heures effectives auxquelles son statut est passé de « disponible » à « indisponible » et inversement au court des dernières X heures (avec X par exemple compris entre 1 et 168) ; la distance séparant le véhicule concerné d'un point prédéfini de la zone G (par exemple le centre-ville) au moment du calcul ; les données climatologiques dans la zone G et/ou dans une sous-zone concernée (prévisions à Z heures, avec Z par exemple compris entre 24 et 168) ; des données relatives à l'heure d'évènements intervenus et/ou à intervenir à la date D, dans la zone G et/ou dans les sous-zones ; le nombre d'utilisateurs ayant libéré des véhicules au court des dernières Y heures (avec Y compris entre 1 et 168) dans les différentes sous-zones. Ces données d'entrée donnent les meilleurs résultats en termes de précision de calcul. La donnée de sortie est le temps moyen d'attente ITm-Vj propre au véhicule concerné Vj.

Pour davantage de précision, le calcul du temps moyen d'attente propre à chaque véhicule ITm-Vj est préférentiellement effectué plusieurs fois par jour, notamment dès que le statut du véhicule concerné passe à « disponible ». Le calcul du temps moyen d'attente peut toutefois être effectué une seule fois par jour (par exemple entre 0h et 6h), mais les résultats obtenus sont moins précis.

Le temps moyen d'attente ITm-SGi dans une sous-zone SGi est alors calculé en moyennant les temps moyens d'attente propres aux véhicules disponibles à la réservation se trouvant dans ladite sous-zone : ITm-SGi = (ITm-V1 + ITm-V2 + ... + ITm-Vn)/n (avec n le nombre de véhicules ayant un statut « disponible » dans la sous-zone SGi au moment du calcul). Les données de localisation des véhicules permettent de déterminer dans quelle sous-zone ils sont situés.

### Quatrième mode de calcul du temps moyen d'attente

Un quatrième mode de calcul combine le résultat du troisième mode avec le résultat du premier mode ou du deuxième mode. Le résultat obtenu avec le premier ou le deuxième mode est pondéré ou moyenné avec les résultats obtenus avec le troisième mode. Par exemple si le temps moyen d'attente dans la sous-zone SGi calculé selon le premier ou le deuxième mode est ITm1-SGi = 4h et que le temps moyen d'attente dans la sous-zone SGi calculé selon le troisième mode est ITm2-SGi = 3h, alors le temps d'attente calculé selon le quatrième mode peut être IT'm-SGi = (ITm1-SGi + ITm2-SGi)/2 = 3,5h. Et de manière plus générale IT'm-SGi = f(ITm1-SGi, ITm2-SGi), où f est une fonction numérique de deux variables.

Selon un autre mode de réalisation, on cherche à estimer le temps moyen d'attente propre à chaque véhicule disponible à la réservation. Le résultat obtenu avec le troisième mode est pondéré ou moyenné avec le résultat obtenu avec le premier ou le deuxième mode. Par exemple si le temps moyen d'attente propre au véhicule Vj calculé selon le troisième mode est ITm-Vj = 2h et que le temps moyen d'attente dans la sous-zone SGi où est localisé ledit véhicule, calculé selon le premier ou le deuxième mode est ITm-SGi = 1h, alors le temps d'attente propre au véhicule Vj calculé selon le quatrième mode peut être IT'm-Vj = (ITm-Vj + ITm-SGi)/2 = 1,3h. Et de manière plus générale IT'm-Vj = g(ITm-Vj, ITm-SGi), où g est une fonction numérique de deux variables.

### Correction du temps moyen d'attente pour les véhicules électriques

Cette correction est avantageusement appliquée aux véhicules électriques, mais n'est ni essentielle ni nécessaire à la mise en œuvre de l'invention. En effet, la seule prise en compte des temps moyens d'attente calculés selon l'un des modes de calcul précédents suffit à mettre en œuvre l'invention.

Le taux de charge de batterie de chaque véhicule électrique disponible à la réservation est avantageusement détecté par le serveur S. Selon un mode de réalisation, ces informations concernant le taux de charge sont transmises au serveur S par l'équipement EQVej du véhicule électrique concerné et fournies au calculateur 35. Selon un autre mode de réalisation, c'est la borne de recharge à laquelle est connecté le véhicule électrique concerné qui détecte le taux de charge de batterie et qui transmet ces informations au serveur S.

Dans un premier temps, le calculateur 35 calcule les temps moyens d'attente ITm-SGi selon l'un des quatre modes précités. Ensuite, pour chaque véhicule électrique disponible à la réservation, le calculateur 35 va pondérer ces temps moyens d'attente avec le niveau de charge de batterie dudit véhicule de manière à obtenir un temps moyen d'attente corrigé ITm'-Vj propre audit véhicule.

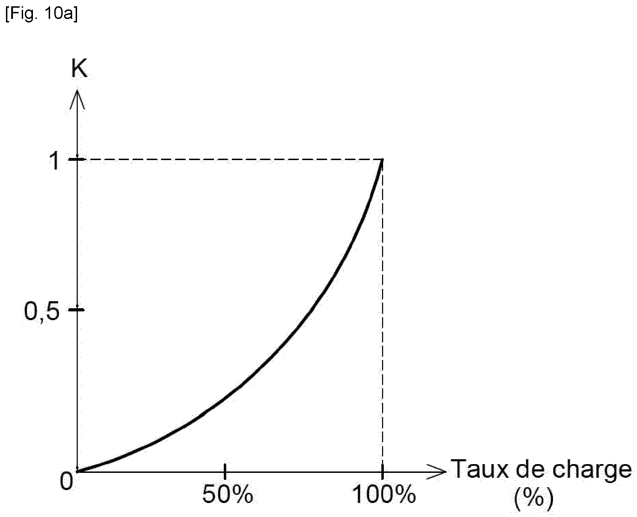

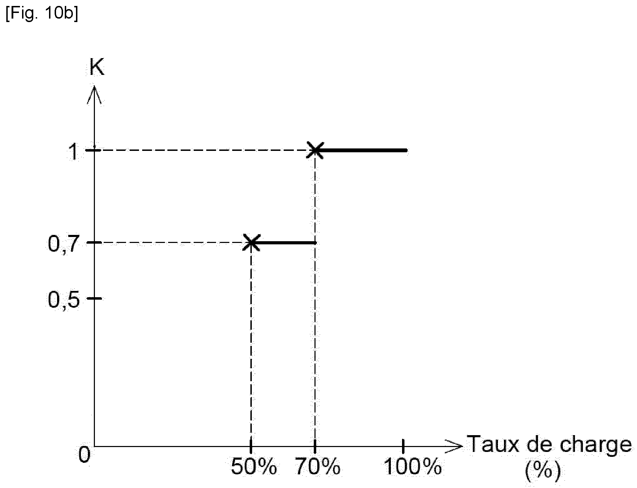

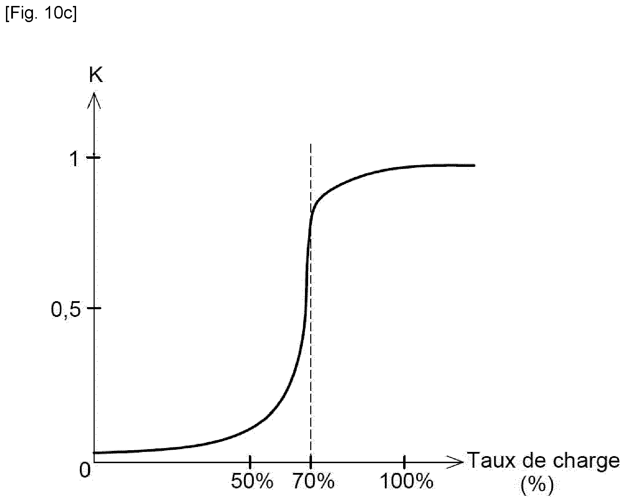

Selon un mode de réalisation, la pondération est réalisée en divisant le temps moyen d'attente ITm-SGi par un coefficient k qui est fonction du taux de charge de batterie du véhicule concerné, avec 0≤k≤1. Des exemples de variations de ce coefficient k en fonction du taux de charge de batterie sont illustrés sur la figure 10a, la figure 10b et la figure 10c.

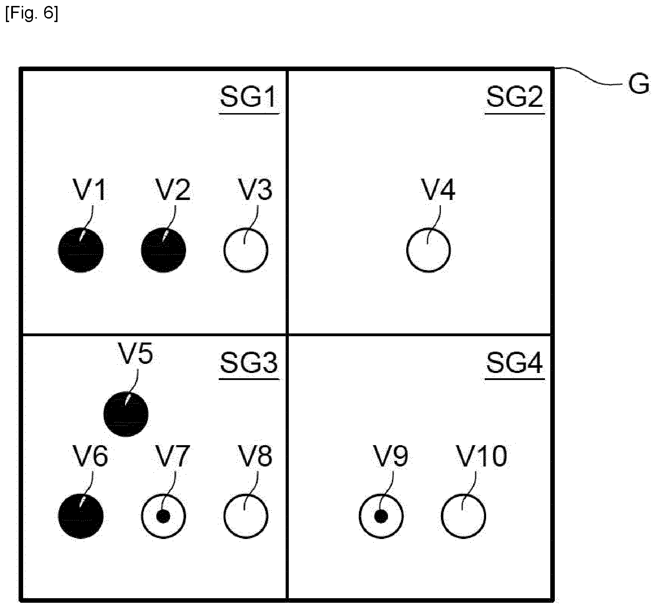

Sur la figure 10a, k=f(taux de charge) avec f une fonction logarithmique ou exponentielle. La fonction f peut également être une fonction linaire croissante du type k= (a x taux de charge)/100 avec a > 0. Plus le taux de charge augmente, plus le coefficient k augmente. Le tableau 1 ci-dessous, référencé en tant que [Table 1], montre des exemples de temps moyen d'attente corrigé pour des véhicules électriques répartis dans la zone géographique G selon la figure 6. À titre d'exemple, les véhicules V7 et V9 ont un statut « indisponible », les autres véhicules V1, V2, V3, V4, V5, V6, V8 et V10 ont un statut « disponible ». Seuls les véhicules V3, V4, V5 et V10 sont des véhicules électriques pour lesquels une correction est appliquée. La mise en œuvre du second processus informatique logique décrit précédemment permet de calculer les temps moyens d'attente ITm dans chaque sous-zone SG1-SG4. À titre d'exemple toujours : ITm-SG1=5h ; ITm-SG2=2h ; ITm-SG3=1h ; ITm-SG4=30min.

**[Table 1]**

| Véhicule | Sous-zone géographique localisée | Temps moyen **d'attente** calculé ITm-SGi | Taux de charge batterie | Valeur de k | Temps moyen **d'attente** corrigé ITm'-Vj |
|---|---|---|---|---|---|
| V3 | SG1 | 5 h | 50 % | 0,3 | 16,7 h |
| V4 | SG2 | 2 h | 30% | 0,2 | 10 h |
| V5 | SG3 | 1 h | 80% | 0,9 | 1,1 h |
| V10 | SG4 | 30 min | 10% | 0,1 | 5 h |

On constate sur [Table 1] qu'un taux de charge de 80% n'a pratiquement pas d'impact sur le temps moyen d'attente corrigé. À l'inverse, un taux de charge inférieur ou égale à 50% a un impact considérable. Par exemple, le véhicule V10 qui se trouve dans une sous-zone SG4 où le temps moyen d'attente calculé est relativement faible (30 min) voit son temps moyen d'attente corrigé fortement augmenté pour passer à 5 h. Ce qui revient à dire que ce véhicule V10 a très peu de chance d'être réservé alors qu'il se trouve dans une sous-zone SG4 où la demande de réservation est forte.

Sur la figure 10b, k prend une valeur fixe selon des plages de taux de charge. Par exemple, pour un taux de charge supérieur ou égal à 70% alors k=1 ; pour un taux de charge compris entre 50 % (borne inférieure incluse) et 70% (borne supérieure exclue) alors k=0,7 ; et pour un taux de charge inférieur à 50 %, alors k=0. Le tableau 2 ci-dessous, référencé en tant que [Table 2], montre des exemples de temps moyen d'attente corrigé.

**[Table 2]**

| Véhicule | Sous-zone géographique localisée | Temps moyen **d'attente** calculé ITm-SGi | Taux de charge batterie | Valeur de k | Temps moyen **d'attente** corrigé ITm'-Vj |
|---|---|---|---|---|---|
| V3 | SG1 | 5 h | 50 % | 0,7 | 7,15 h |
| V4 | SG2 | 2 h | 30% | 0 | infini |
| V5 | SG3 | 1 h | 80% | 1 | 1 h |
| V10 | SG4 | 30 min | 10% | 0 | infini |

On constate sur [Table 2] qu'avec un taux de charge inférieur à 30%, les véhicules ont une probabilité nulle d'être réservés, quelle que soit la sous-zone où ils sont localisés.

Sur la figure 10c, k=g(taux de charge) avec g une fonction sigmoïde, ce type de courbe permettant d'obtenir des variations plus fines que celles de la figure 10b. Le tableau 3 ci-dessous, référencé en tant que [Table 3], montre des exemples de temps moyen d'attente corrigé.

**[Table 3]**

| Véhicule | Sous-zone géographique localisée | Temps moyen **d'attente** calculé ITm-SGi | Taux de charge batterie | Valeur de k | Temps moyen **d'attente** corrigé ITm'-Vj |
|---|---|---|---|---|---|
| V3 | SG1 | 5 h | 50 % | 0,1 | 50 h |
| V4 | SG2 | 2 h | 30% | 0,05 | 40 h |
| V5 | SG3 | 1 h | 80% | 0,95 | 1,05 h |
| V10 | SG4 | 30 min | 10% | 0,01 | 50 h |

On constate sur [Table 3] qu'avec un taux de charge inférieur à 70%, les véhicules ont une probabilité quasi-nulle d'être réservés, quelle que soit la sous-zone où ils sont localisés.

La fonction ou la relation permettant d'affecter une valeur du coefficient k à un taux de charge de batterie peut être prédéfinie et enregistrée dans une zone mémoire du serveur S. Selon un mode de réalisation, une même fonction ou relation est affectée à toutes les sous-zones SG1-SG4. Par exemple, le modèle de variation de la figure 10a, ou de la figure 10b, ou de la figure 10c est affecté à chacune des sous-zones SG1-SG4. Selon une variante de réalisation, une fonction ou relation distincte est affectée aux sous-zones SG1-SG4. Par exemple, le modèle de la figure 10a est affecté aux sous-zones SG1 et SG3, le modèle de la figure 10b à la sous-zone SG2, et le modèle de la figure 10c est affecté à la sous-zone SG4.

Pour améliorer la précision de la correction du temps moyen d'attente, il est avantageux de définir la variation du coefficient k en fonction du taux de charge de batterie, en s'appuyant sur une application informatique basée sur un modèle d'intelligence artificielle du type décrit précédemment. Selon un mode de réalisation, les données d'entrée d'apprentissage comprennent un historique des requêtes de réservation effectives reçues par le serveur S, la localisation des véhicules au moment de leur réservation, les taux de charge de batterie des véhicules au moment de leur réservation, les temps moyens d'attente calculés, les temps d'attente réels des véhicules. Les données de sortie d'apprentissage sont des valeurs de coefficient k. Une fois l'apprentissage effectué, les données d'entrée du modèle entraîné sont l'identification du véhicule Vj disponible à la réservation, la localisation dudit véhicule Vj au moment du calcul, le taux de charge de batterie dudit véhicule Vj disponible à la réservation. La donnée de sortie est la valeur du coefficient k.

Selon un autre mode de réalisation, le modèle d'intelligence artificielle est celui décrit en référence au deuxième mode de calcul ou au troisième mode de calcul, les taux de charge de batterie étant utilisés comme données d'entrée d'apprentissage et comme données d'entrée du modèle entraîné. Les données de sortie du modèle entraîné sont alors directement le temps moyen d'attente corrigé ITm'-Vj propre au véhicule Vj.

Les mêmes principes s'appliquent aux véhicules à moteur thermique, le taux de charge de batterie étant substitué par le niveau de remplissage du réservoir. Pour les véhicules hybrides à motorisation électrique et thermique, le taux de charge de batterie et le niveau de remplissage du réservoir sont pris en compte.

La correction du temps moyen d'attente qui vient d'être décrite peut être effectuée à une fréquence déterminée et/ou paramétrée, avantageusement une ou plusieurs fois par jour, par exemple dès que le statut d'un véhicule passe de « indisponible » à « disponible ».

### Prise en compte des temps moyens d'attente pour la recharge des batteries des véhicules électriques

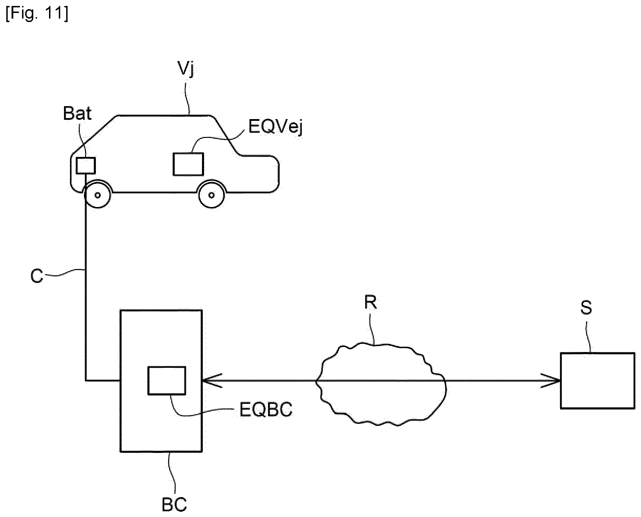

La figure 11 illustre un véhicule électrique Vj connecté à une borne de recharge BC. Un câble C connecte la batterie Bat du véhicule Vj à la borne BC. La borne BC est de type connu et ne sera pas décrite plus en détail. Elle intègre toutefois un équipement informatique EQBC lui permettant de communiquer avec le serveur S au travers d'un réseau de données R. Une application informatique de gestion de bornes de recharge est implémentée dans le serveur S. Cette application de gestion de bornes peut être l'application de gestion de flotte décrite précédemment ou une application distincte.

Selon un mode de réalisation, les temps moyens d'attente calculés ITm-SGi affectés aux sous-zones ou aux véhicules localisés dans ces sous-zones et/ou les temps moyens d'attente corrigés ITm'-Vj propres aux véhicules électriques, sont fournis à l'application informatique de gestion de bornes implémentée dans le serveur S.

L'application informatique de gestion de bornes utilise ces valeurs de temps moyens d'attente comme données d'entrée (éventuellement combinées à d'autres données d'entrée). Les données de sortie de cette application sont des requêtes d'activation des bornes de recharge. À réception de ces requêtes d'activation, les bornes de charge sont activées pour qu'elles rechargent de manière effective les batteries des véhicules auxquelles elles sont connectées. Sans ces requêtes d'activation, les bornes sont inactives et ne peuvent pas recharger les batteries (sauf si un éventuel mode de recharge forcée est activé sur une borne).

L'application va prioriser les requêtes d'activation en fonction des valeurs calculées des temps moyens d'attente ITm-SGi et/ou ITm'-Vj. Cette priorisation des requêtes est notamment basée sur une sélection judicieuse de véhicules parmi la pluralité des véhicules de la flotte.

### Sélection des véhicules

La figure 6 illustre la répartition de véhicules V1-V10 d'une flotte dans des sous-zones géographiques SG1-SG4. À titre d'exemple, les véhicules V1, V2, V5, V6 et V8 sont des véhicules à moteur thermique et les véhicules V3, V4, V7, V9, V10 sont des véhicules électriques. Les véhicules V7 et V9 ont un statut « indisponible », les autres véhicules ont un statut « disponible ». Les véhicules électriques V3, V4 et V10 sont chacun connectés à une borne de recharge.

La mise en œuvre du processus informatique logique décrit précédemment permet de calculer les temps moyens d'attente ITm dans chaque sous-zone SG1-SG4. A titre d'exemple toujours : ITm-SG1=5h ; ITm-SG2=2h ; ITm-SG3=1h ; ITm-SG4=30min.

On opère une sélection du ou des véhicules électriques disponibles à la réservation (statut « disponible ») et connectés à des bornes de recharge, en utilisant comme critère de sélection les valeurs calculées des temps moyens d'attente, éventuellement les valeurs corrigées.

Selon un mode de réalisation, les requêtes d'activation sont priorisées par ordre croissant des temps moyens d'attente. En reprenant l'exemple précité, la sous-zone SG4 a le temps moyen d'attente le plus faible (ITm-SG4=30min) de sorte que le véhicule électrique V10 est sélectionné en priorité. Le serveur S va alors transmettre en priorité (par exemple à l'instant T) une requête d'activation à la borne de recharge à laquelle est connecté le véhicule V10.

Les autres requêtes destinées aux bornes des autres véhicules V3 et V4 sont transmises ultérieurement, de manière échelonnée dans le temps. Par exemple la requête d'activation est d'abord transmise à la borne du véhicule V4 situé dans la zone SG2 où ITm-SG2=2h (à l'instant T+1 heure par exemple), puis à la borne du véhicule V3 situé dans la zone SG1 où ITm-SG1=5h (à l'instant T+3 heures par exemple).

Sans cette priorisation des requêtes d'activation, les trois bornes connectées aux véhicules V3, V4 et V10 seraient activées simultanément par le serveur S. L'énergie électrique consommée simultanément par l'ensemble des bornes peut alors être relativement importante, et provoquer une pointe de consommation électrique sur le réseau électrique. Grâce à l'apport de l'invention, les bornes sont maintenant activées de manière échelonnée dans le temps de sorte que les pointes de consommation d'énergie électrique sont atténuées. L'invention contribue ainsi à un meilleur équilibrage des conditions énergétiques parfois fluctuantes du réseau électrique.

Il n'est pas nécessaire de recharger à 100% les véhicules électriques. On peut en effet prévoir d'arrêter la recharge lorsque le taux de charge atteint une valeur seuil prédéterminée, par exemple 50% ou préférentiellement 70%. Lorsque ce seuil est atteint, le serveur S peut transmettre à la borne concernée une requête de désactivation pour arrêter la recharge, ce qui contribue à réduire encore davantage la consommation électrique sur le réseau électrique.

Selon un mode de réalisation, si un véhicule électrique a initialement (c'est-à-dire au moment où il se connecte à la borne) un taux de charge égal ou supérieur à une valeur seuil prédéterminée, par exemple 50% ou préférentiellement 70%, alors le serveur S ne transmet pas de requête d'activation à la borne à laquelle ledit véhicule est connecté. Et cela, quel que soit le temps moyen d'attente affecté à ce véhicule. Le taux de charge de batterie est ainsi une autre donnée d'entrée de l'application de gestion de borne.

Selon un autre exemple, les valeurs corrigées des temps moyens d'attente sont utilisées comme données d'entrée de l'application de gestion de bornes. À titre d'exemple, les valeurs de [Table 3] sont prises en compte. Si les requêtes d'activation sont priorisées par ordre croissant des temps moyens d'attente corrigés, le serveur S va transmettre en priorité une requête d'activation à la borne de recharge à laquelle est connecté le véhicule V4 (ITm'-V4=40 h). Les véhicules V3 et V10 ayant le même temps moyen d'attente corrigé (ITm'-V3 =ITm'-V10=50 h), une requête d'activation pourra ensuite être transmise à la borne du véhicule V3 puis à celle du véhicule V10 ou inversement.

La priorisation des requêtes d'activation par ordre croissant des temps moyens d'attente corrigés n'est pas systématiquement judicieuse. En effet, le véhicule V10 se trouvant dans la sous-zone SG4 ayant le temps moyen d'attente le plus faible, il a de fortes probabilités d'être réservé s'il était rechargé. On a donc intérêt à le recharger le plus rapidement possible pour qu'il puisse être réservé rapidement. Le temps moyen d'attente dans la sous-zone où est localisé le véhicule concerné peut donc être une autre donnée d'entrée de l'application informatique de gestion de bornes, cette donnée permettant notamment de pondérer le temps moyen d'attente corrigé.

De manière générale, le ou les véhicules électriques sélectionnés sont ceux qui ont statistiquement les plus de chances d'être utilisés (c'est-à-dire réservés) rapidement. Les opérations de recharge de batterie vont alors être ciblées en priorité sur ces véhicules sélectionnés de sorte qu'ils soient rechargés le plus rapidement possible, préférentiellement avant leur prochaine réservation. On conserve ainsi des chances élevées qu'un utilisateur trouve un véhicule rechargé au moment de son utilisation (réservation), alors même que le débit numérique nécessaire à la transmission de l'ensemble des requêtes est réduit.

### Produit programme d'ordinateur

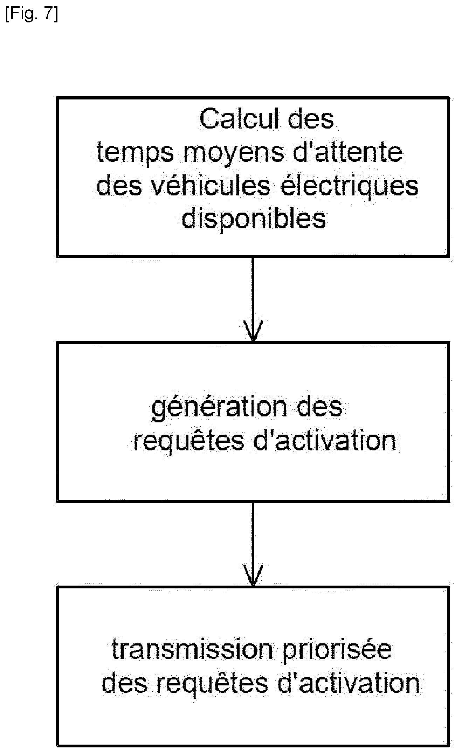

Selon encore un autre aspect, l'invention concerne un produit programme d'ordinateur comprenant des instructions de code pour l'exécution du procédé décrit précédemment, et notamment celui dont les principales étapes sont mentionnées dans la figure 7, lorsqu'il est exécuté par un calculateur 35.

L'agencement des différents éléments et/ou moyens et/ou étapes de l'invention, dans les modes de réalisation décrits ci-dessus, ne doit pas être compris comme exigeant un tel agencement dans toutes les implémentations.

Enfin, une ou plusieurs caractéristiques et/ou étapes exposées seulement dans un mode ou exemple de réalisation peuvent être généralisées aux autres modes de réalisation. De même, une ou plusieurs caractéristiques et/ou étapes exposées seulement dans un mode ou exemple de réalisation peuvent être combinées avec une ou plusieurs autres caractéristiques et/ou étapes exposées seulement dans un autre mode de réalisation.

## Revendications

1. Procédé pour commander l'activation de bornes de recharges de véhicules électriques, lesquelles bornes sont connectées à un réseau électrique sur lequel elles consomment de l'énergie électrique lorsqu'elles sont activées, lesquels véhicules appartiennent à une flotte de véhicules partagés (V1-V10), lesdits véhicules et lesdites bornes étant localisés dans une zone géographique (G) définie, ledit procédé comportant les étapes suivantes :
- a) mettre en œuvre un processus informatique logique dans un calculateur (35), lequel processus est adapté pour calculer, pour chaque véhicule électrique (Vj) de la flotte disponible à la réservation et connecté à une borne de recharge (BC), un temps moyen d'attente entre deux réservations pendant lequel ledit véhicule ne sera pas réservé, lequel calcul est réalisé en exécutant une application informatique basée sur un modèle d'intelligence artificielle,
- b) fournir les valeurs des temps moyens d'attente calculés à l'étape a) à une application informatique de gestion de bornes de recharge implémentée dans un serveur informatique (S), lesquelles valeurs sont utilisées comme données d'entrée de ladite application, les données de sortie de ladite application étant des requêtes d'activation des bornes de recharge,
- c) transmettre les requêtes d'activation aux bornes de recharge auxquelles sont connectés les véhicules électriques de la flotte disponible à la réservation, la réception desdites requêtes déclenchant l'activation des bornes pour qu'elles rechargent de manière effective des batteries des véhicules auxquelles elles sont connectées, laquelle transmission est réalisée en priorisant lesdites requêtes par ordre croissant des valeurs des temps moyens d'attente calculés à l'étape a), de sorte que lesdites bornes sont activées de manière échelonnée dans le temps pour réduire les pointes de consommation électrique sur le réseau électrique et/ou pour mieux équilibrer les conditions énergétiques dudit réseau électrique.

2. Procédé selon la revendication 1, dans lequel l'étape a) comprend les sous-étapes suivantes :
- a1) calculer pour chaque véhicule de la flotte disponible à la réservation un temps moyen d'attente pendant lequel ledit véhicule ne sera pas réservé,
- a2) détecter le taux de charge de batterie de chaque véhicule électrique (Vj) disponible à la réservation,
- a3) pour chaque véhicule électrique (Vj) disponible à la réservation, pondérer le temps moyen d'attente calculé à l'étape a1) avec le taux de charge de batterie dudit véhicule de manière à obtenir un temps moyen d'attente corrigé (ITm'-Vj) dudit véhicule.

3. Procédé selon la revendication 2, dans lequel la pondération de l'étape a3) est réalisée en divisant le temps moyen d'attente calculé à l'étape a1) par un coefficient k qui est fonction du taux de charge de batterie du véhicule concerné détecté à l'étape a2), avec 0≤k≤1.

4. Procédé selon l'une des revendications précédentes, comportant les étapes suivantes :
- préalablement à l'étape a), mettre en œuvre un premier processus informatique logique dans un calculateur (35), lequel premier processus est adapté pour définir la zone géographique (G) où sont localisés les véhicules de la flotte et pour opérer un maillage de ladite zone de façon à la diviser en sous-zones géographiques (SG1-SG4),
- exécuter l'étape a) en mettant en œuvre un second processus informatique logique adapté pour calculer, dans chaque sous-zone géographique (SG1-SG4) et pour chaque véhicule de la flotte disponible à la réservation dans la sous-zone concernée (SGi), un temps moyen d'attente (ITm-SGi) pendant lequel ledit véhicule ne sera pas réservé.

5. Procédé selon la revendication 4, dans lequel :
- le calcul de l'étape a) est basé sur un algorithme d'apprentissage entraîné pour calculer de manière prédictive à une date donnée et à un instant donné, et dans chaque sous-zone géographique (SG1-SG4), un temps moyen d'attente (ITm-SGi) qui est affecté à chaque véhicule disponible à la réservation dans la sous-zone concernée,
- les données d'entrée d'apprentissage de l'algorithme d'apprentissage proviennent :
∘ d'un historique de requêtes de réservation effectives de véhicules (V1-V10) de la flotte, et
∘ de tout ou partie des données suivantes : la localisation des sous-zones géographiques (SG1-SG4) depuis lesquelles des requêtes de réservation ont été émises au court des dernières X heures, avec X compris entre 1 et 168 ; la distance des sous-zones géographiques (SG1-SG4) par rapport à un point prédéfini de la zone géographique (G) ; pour chaque véhicule (V1-V10) de la flotte auxquels sont affectés un statut « disponible à la réservation » ou un statut « indisponible à la réservation », les heures effectives auxquelles leur statut passe de « disponible à la réservation » à « indisponible à la réservation » et inversement ; des données climatologiques ; des données relatives à une date et heure d'évènements intervenus dans la zone géographique (G) et/ou dans l'une de ses sous-zones (SG1-SG4) ; le nombre d'utilisateurs ayant libéré des véhicules de la flotte au court des dernières Y heures, avec Y compris entre 1 et 168 dans chaque sous-zone géographique (SG1-SG4),
- les données de sortie d'apprentissage sont les temps d'attente réels des véhicules (V1-V10) de la flotte dans chaque sous-zone géographique (SG1-SG4).

6. Procédé selon la revendication 5, dans lequel :
- au moment de l'exécution de l'étape a), les données d'entrée (De1-Den) de l'algorithme d'apprentissage entraîné (ME) sont tout ou partie des données suivantes : l'identification d'une sous-zone géographique (SGi) concernée ; la localisation des sous-zones géographiques (SG1-SG4) depuis lesquelles des requêtes de réservation ont été émises au court des dernières X heures, avec X compris entre 1 et 168 ; la distance de la sous-zone géographique (SGi) concernée par rapport à un point prédéfini de la zone géographique (G) ; des données climatologiques dans la zone géographique (G) et/ou dans la sous-zone géographique (SGi) concernée ; des données relatives à l'heure d'évènements intervenus et/ou à intervenir à la date donnée, dans la zone géographique (G) et/ou dans la sous-zone géographique (SGi) concernée et/ou dans les autres sous-zones géographiques (SG1-SG4) ; le nombre d'utilisateurs ayant libéré des véhicules de la flotte au court des dernières Y heures, avec Y compris entre 1 et 168 dans la sous-zone géographique (SGi) concernée,
- la donnée de sortie de l'algorithme d'apprentissage entraîné (ME) est un temps moyen d'attente (ITm-SGi) qui est affecté à chaque véhicule disponible à la réservation dans la sous-zone concernée.

7. Procédé selon la revendication 4, dans lequel :
- le calcul de l'étape a) est basé sur un algorithme d'apprentissage entraîné pour calculer de manière prédictive à une date donnée et à un instant donné, et dans chaque sous-zone géographique (SG1-SG4), un temps moyen d'attente (ITm-SGi) qui est affecté à chaque véhicule disponible à la réservation dans la sous-zone concernée,
- les données d'entrée d'apprentissage de l'algorithme d'apprentissage proviennent :
∘ d'un historique de requêtes de réservation effectives de véhicules (V1-V10) de la flotte, et
∘ de tout ou partie des données suivantes : le type et le modèle chaque véhicule (V1-V10) de la flotte ; la localisation (V1-V10) des véhicules de la flotte au moment de leur réservation ; la distance des véhicules (V1-V10) de la flotte au moment de leur réservation par rapport à un point prédéfini de la zone géographique (G) ; pour chaque véhicule (V1-V10) de la flotte auxquels sont affectés un statut « disponible à la réservation » ou un statut « indisponible à la réservation », les heures effectives auxquelles leur statut est passé de « disponible à la réservation » à « indisponible à la réservation » et inversement ; des données climatologiques ; des données relatives à la date et l'heure d'évènements intervenus dans la zone géographique (G) et/ou dans l'une de ses sous-zones géographiques (SG1-SG4) ; le nombre d'utilisateurs ayant libéré des véhicules (V1-V10) de la flotte au court des dernières Y heures, avec Y compris entre 1 et 168 dans chaque sous-zone géographique (SG1-SG4),
- les données de sortie d'apprentissage sont les temps d'attente réels des véhicules (V1-V10) de la flotte.

8. Procédé selon la revendication 7, dans lequel :
- au moment de l'exécution de l'étape a), les données d'entrée (De1-Den) de l'algorithme d'apprentissage entraîné (ME) sont tout ou partie des données suivantes : l'identification d'un véhicule (Vj) concerné de la flotte ; la localisation du véhicule concerné (Vj) au moment du calcul ; pour le véhicule (Vj) concerné, les heures effectives auxquelles son statut est passé de « disponible » à « indisponible » et inversement au court des dernières X heures, avec X compris entre 1 et 168 ; la distance séparant le véhicule (Vj) concerné d'un point prédéfini de la zone géographique (G) au moment du calcul ; des données climatologiques dans la zone géographique (G) et/ou dans une sous-zone géographique (SG1-SG4) concernée ; des données relatives à l'heure d'évènements intervenus et/ou à intervenir à la date donnée, dans la zone géographique (G) et/ou dans les sous-zones géographiques (SG1-SG4) ; le nombre d'utilisateurs ayant libéré des véhicules au court des dernières Y heures, avec Y compris entre 1 et 168, dans les différentes sous-zones géographiques (SG1-SG4),
- la donnée de sortie de l'algorithme d'apprentissage entraîné (ME) est un temps moyen d'attente (ITm-Vj) propre au véhicule concerné (Vj).

9. Procédé selon la revendication 8, dans lequel le temps moyen d'attente (ITm-SGi) affecté à chaque véhicule de la flotte disponible à la réservation dans une sous-zone concernée (SGi) est calculé en moyennant les temps moyens d'attente (ITm-Vj) propres aux véhicules disponibles à la réservation se trouvant dans ladite sous-zone.

10. Procédé selon l'une des revendications précédentes, comprenant une étape consistant à transmettre une requête de désactivation à une des bornes de recharge lorsque le taux de charge de batterie du véhicule à laquelle ladite borne est connectée atteint une valeur seuil prédéterminée.

11. Procédé selon l'une des revendications précédentes, dans lequel, si un véhicule électrique a un taux de charge égal ou supérieur à une valeur seuil prédéterminée au moment où ledit véhicule se connecte à une des bornes de recharge, alors il n'y a pas de transmission de requête d'activation à ladite borne à laquelle ledit véhicule est connecté.

12. Système adapté pour la mise en œuvre du procédé selon l'une des revendications précédentes, comportant un calculateur (35) adapté pour exécuter les étapes dudit procédé.

13. Produit programme d'ordinateur comprenant des instructions de code pour l'exécution des étapes du procédé selon la revendication 1, lorsqu'il est exécuté par un calculateur (35).

## Patentansprüche

1. Verfahren zum Steuern der Aktivierung von Ladestationen für Elektrofahrzeuge, wobei die Ladestationen an ein Stromnetz angeschlossen sind, über das sie elektrische Energie verbrauchen, wenn sie aktiviert sind, wobei die Fahrzeuge zu einer Flotte von gemeinsam genutzten Fahrzeugen (V1-V10) gehören, wobei sich die Fahrzeuge und die Ladestationen in einem definierten geografischen Gebiet (G) befinden, wobei das Verfahren folgende Schritte aufweist:
- a) Implementieren eines logischen Computerprozesses in einem Rechner (35), wobei der Prozess dazu ausgelegt ist, für jedes zur Buchung verfügbare und an eine Ladestation (BC) angeschlossene Elektrofahrzeug (Vj) der Flotte eine durchschnittliche Wartezeit zwischen zwei Buchungen zu berechnen, während der das Fahrzeug nicht gebucht wird, wobei das Berechnen durch Ausführen einer Computeranwendung durchgeführt wird, die auf einem Modell für künstliche Intelligenz basiert,
- b) Bereitstellen der Werte der in Schritt a) berechneten durchschnittlichen Wartezeiten an eine Computeranwendung zur Verwaltung von Ladestationen, die in einem Computerserver (S) implementiert ist, wobei die Werte als Eingabedaten der Anwendung verwendet werden, wobei die Ausgabedaten der Anwendung Aktivierungsanfragen an die Ladestationen sind,
- c) Übertragen der Aktivierungsanfragen an die Ladestationen, an die die zur Buchung verfügbaren Elektrofahrzeuge der Flotte angeschlossen sind, wobei das Empfangen der Anfragen das Aktivieren der Ladestationen auslöst, damit diese die Batterien der Fahrzeuge, an die sie angeschlossen sind, effektiv aufladen, wobei das Übertragen durch Priorisieren der Anfragen in aufsteigender Reihenfolge der Werte der in Schritt a) berechneten durchschnittlichen Wartezeiten durchgeführt wird, so dass die Ladestationen zeitlich gestaffelt aktiviert werden, um die Spitzen des Stromverbrauchs im Stromnetz zu reduzieren und/oder die Energiebedingungen des Stromnetzes besser auszugleichen.

2. Verfahren nach Anspruch 1, wobei Schritt a) folgende Unterschritte umfasst:
- a1) Berechnen, für jedes zur Buchung verfügbare Fahrzeug der Flotte, einer durchschnittlichen Wartezeit, während der das Fahrzeug nicht gebucht wird,
- a2) Erfassen des Batterieladezustands jedes zur Buchung verfügbaren Elektrofahrzeugs (Vj),
- a3) für jedes zur Buchung verfügbare Elektrofahrzeug (Vj), Gewichten der in Schritt a1) berechneten durchschnittlichen Wartezeit mit dem Batterieladezustand des Fahrzeugs, um eine korrigierte durchschnittliche Wartezeit (ITm'-Vj) des Fahrzeugs zu erhalten.

3. Verfahren nach Anspruch 2, wobei das Gewichten in Schritt a3) durch Teilen der in Schritt a1) berechneten durchschnittlichen Wartezeit durch einen Koeffizienten k durchgeführt wird, der von dem in Schritt a2) erfassten Batterieladezustand des jeweiligen Fahrzeugs abhängt, wobei 0≤k≤1.

4. Verfahren nach einem der vorhergehenden Ansprüche, das folgende Schritte aufweist:
- vor Schritt a), Implementieren eines ersten logischen Computerprozesses in einem Rechner (35), wobei der erste Prozess dazu ausgelegt ist, das geografische Gebiet (G) zu definieren, in dem sich die Fahrzeuge der Flotte befinden, und eine Vernetzung des Gebiets zu bewirken, um es in geografische Teilgebiete (SG1-SG4) zu unterteilen,
- Ausführen von Schritt a) durch Implementieren eines zweiten logischen Computerprozesses, der dazu ausgelegt ist, in jedem geografischen Teilgebiet (SG1-SG4) und für jedes zur Buchung verfügbare Fahrzeug der Flotte in dem jeweiligen Teilgebiet (SGi) eine durchschnittliche Wartezeit (ITm-SGi) zu berechnen, während der das Fahrzeug nicht gebucht wird.

5. Verfahren nach Anspruch 4, wobei:
- das Berechnen in Schritt a) auf einem Lernalgorithmus basiert, der so trainiert ist, dass er zu einem gegebenen Datum und Zeitpunkt und in jedem geografischen Teilgebiet (SG1-SG4) eine durchschnittliche Wartezeit (ITm-SGi) vorhersagend berechnet, die jedem zur Buchung verfügbaren Fahrzeug in dem jeweiligen Teilgebiet zugeordnet wird,
- die Lerneingabedaten des Lernalgorithmus von Folgendem bezogen werden:
∘ von einer Historie von tatsächlichen Buchungsanfragen für Fahrzeuge (V1-V10) der Flotte, und
∘ von allen oder einem Teil der folgenden Daten: der Standort der geografischen Teilgebiete (SG1-SG4), aus denen in den letzten X Stunden Buchungsanfragen gesendet worden sind, wobei X zwischen 1 und 168 liegt; die Entfernung der geografischen Teilgebiete (SG1-SG4) in Bezug auf einen vordefinierten Punkt in dem geografischen Gebiet (G); für jedes Fahrzeug (V1-V10) der Flotte, dem ein Status "zur Buchung verfügbar" oder ein Status "zur Buchung nicht verfügbar" zugeordnet ist, die tatsächlichen Zeiten, zu denen ihr Status von "zur Buchung verfügbar" zu "zur Buchung nicht verfügbar" und umgekehrt wechselt; klimatologische Daten; Daten bezüglich eines Datums und einer Uhrzeit von Ereignissen, die in dem geografischen Gebiet (G) und/oder einem seiner Teilgebiete (SG1-SG4) stattgefunden haben; die Anzahl der Nutzer, die in den letzten Y Stunden, wobei Y zwischen 1 und 168 liegt, Fahrzeuge der Flotte in jedem geografischen Teilgebiet (SG1-SG4) freigegeben haben,
- die Lernausgabedaten die realen Wartezeiten der Fahrzeuge (V1-V10) der Flotte in jedem geografischen Teilgebiet (SG1- SG4) sind.

6. Verfahren nach Anspruch 5, wobei:
- während des Ausführens von Schritt a) die Eingabedaten (De1-Den) des trainierten Lernalgorithmus (ME) alle oder ein Teil der folgenden Daten sind: die Identifizierung eines jeweiligen geografischen Teilgebiets (SGi); der Standort der geografischen Teilgebiete (SG1-SG4), aus denen in den letzten X Stunden Buchungsanfragen gesendet worden sind, wobei X zwischen 1 und 168 liegt; die Entfernung des jeweiligen geografischen Teilgebiets (SGi) in Bezug auf einen vordefinierten Punkt im geografischen Gebiet (G); klimatologische Daten im geografischen Gebiet (G) und/oder im jeweiligen geografischen Teilgebiet (SGi); Daten bezüglich der Uhrzeit von Ereignissen, die an dem gegebenen Datum in dem geografischen Gebiet (G) und/oder in dem jeweiligen geografischen Teilgebiet (SGi) und/oder in den anderen geografischen Teilgebieten (SG1-SG4) stattgefunden haben und/oder stattfinden werden; die Anzahl der Nutzer, die in den letzten Y Stunden, wobei Y zwischen 1 und 168 liegt, Fahrzeuge der Flotte in dem jeweiligen geografischen Teilgebiet (SGi) freigegeben haben,
- die Ausgabedaten des trainierten Lernalgorithmus (ME) eine durchschnittliche Wartezeit (ITm-SGi) ist, die jedem zur Buchung verfügbaren Fahrzeug in dem jeweiligen Teilgebiet zugeordnet wird.

7. Verfahren nach Anspruch 4, wobei:
- das Berechnen in Schritt a) auf einem Lernalgorithmus basiert, der so trainiert ist, dass er zu einem gegebenen Datum und einem gegebenen Zeitpunkt und in jedem geografischen Teilgebiet (SG1-SG4) eine durchschnittliche Wartezeit (ITm-SGi) vorhersagend berechnet, die jedem zur Buchung verfügbaren Fahrzeug in dem jeweiligen Teilgebiet zugeordnet wird,
- die Lerneingabedaten des Lernalgorithmus von Folgendem bezogen werden:
∘ von einer Historie von tatsächlichen Buchungsanfragen für Fahrzeuge (V1-V10) der Flotte, und
∘ von allen oder einem Teil der folgenden Daten: der Typ und das Modell jedes Fahrzeugs (V1-V10) der Flotte; der Standort (V1-V10) der Fahrzeuge der Flotte zum Zeitpunkt ihrer Buchung; die Entfernung der Fahrzeuge (V1-V10) der Flotte in Bezug auf einen vordefinierten Punkt in dem geografischen Gebiet (G) zum Zeitpunkt ihrer Buchung; für jedes Fahrzeug (V1-V10) der Flotte, dem ein Status "zur Buchung verfügbar" oder ein Status "zur Buchung nicht verfügbar" zugeordnet ist, die tatsächlichen Zeiten, zu denen ihr Status von "zur Buchung verfügbar" zu "zur Buchung nicht verfügbar" und umgekehrt wechselt; klimatologische Daten; Daten bezüglich des Datums und der Uhrzeit von Ereignissen, die in dem geografischen Gebiet (G) und/oder einem seiner Teilgebiete (SG1-SG4) stattgefunden haben; die Anzahl der Nutzer, die in den letzten Y Stunden, wobei Y zwischen 1 und 168 liegt, Fahrzeuge (V1-V10) der Flotte in jedem geografischen Teilgebiet (SG1-SG4) freigegeben haben,
- die Lernausgabedaten die realen Wartezeiten der Fahrzeuge (V1-V10) der Flotte sind.

8. Verfahren nach Anspruch 7, wobei:
- während des Ausführens von Schritt a) die Eingabedaten (De1-Den) des trainierten Lernalgorithmus (ME) alle oder ein Teil der folgenden Daten sind: die Identifizierung eines jeweiligen Fahrzeugs (Vj) der Flotte; der Standort des jeweiligen Fahrzeugs (Vj) zum Zeitpunkt der Berechnung; für das jeweilige Fahrzeug (Vj) die tatsächlichen Zeiten, zu denen sein Status in den letzten X Stunden von "verfügbar" zu "nicht verfügbar" und umgekehrt gewechselt hat, wobei X zwischen 1 und 168 liegt; die Entfernung, die zwischen dem jeweiligen Fahrzeug (Vj) und einem vordefinierten Punkt in dem geografischen Gebiet (G) zum Zeitpunkt der Berechnung liegt; klimatologische Daten in dem geografischen Gebiet (G) und/oder in einem jeweiligen geografischen Teilgebiet (SG1-SG4); Daten bezüglich der Uhrzeit von Ereignissen, die an dem gegebenen Datum in dem geografischen Gebiet (G) und/oder in den geografischen Teilgebieten (SG1-SG4) stattgefunden haben und/oder stattfinden werden; die Anzahl der Nutzer, die in den letzten Y Stunden, wobei Y zwischen 1 und 168 liegt, Fahrzeuge in den verschiedenen geografischen Teilgebieten (SG1-SG4) freigegeben haben,
- die Ausgabedaten des trainierten Lernalgorithmus (ME) eine für das jeweilige Fahrzeug (Vj) typische durchschnittliche Wartezeit (ITm-Vj) ist.

9. Verfahren nach Anspruch 8, wobei die durchschnittliche Wartezeit (ITm-SGi), die jedem zur Buchung verfügbaren Fahrzeug der Flotte in einem jeweiligen Teilgebiet (SGi) zugeordnet wird, durch Mitteln der durchschnittlichen Wartezeiten (ITm-Vj) berechnet wird, die für die zur Buchung verfügbaren Fahrzeuge typisch sind, die sich in den Teilgebieten befinden.

10. Verfahren nach einem der vorhergehenden Ansprüche, das einen Schritt umfasst, der darin besteht, eine Deaktivierungsanfrage an eine der Ladestationen zu übertragen, wenn der Batterieladezustand des Fahrzeugs, das an die Ladestation angeschlossen ist, einen vorbestimmten Schwellenwert erreicht.

11. Verfahren nach einem der vorhergehenden Ansprüche, wobei, wenn ein Elektrofahrzeug einen Ladezustand aufweist, der gleich oder größer als ein vorbestimmter Schwellenwert ist, zu dem Zeitpunkt, an dem das Fahrzeug an eine der Ladestationen angeschlossen wird, dann keine Übertragung der Aktivierungsanfrage an die Ladestation stattfindet, an die das Fahrzeug angeschlossen ist.

12. System, das für das Implementieren des Verfahrens nach einem der vorhergehenden Ansprüche ausgelegt ist und einen Rechner (35) enthält, der dazu ausgelegt ist, die Schritte des Verfahrens auszuführen.

13. Computerprogrammprodukt, das Codeanweisungen für das Ausführen der Schritte des Verfahrens nach Anspruch 1 umfasst, wenn es von einem Rechner (35) ausgeführt wird.

## Claims

1. A method for controlling the activation of electric vehicle charging stations, which stations are connected to an electrical network on which they consume electrical energy when activated, which vehicles belong to a fleet of shared vehicles (V1-V10), said vehicles and said stations being located in a defined geographical area (G), said method comprising the following steps:
- a) implementing a logical computing process in a computer (35), which process is adapted to calculate, for each electric vehicle (Vj) of the fleet available for booking and connected to a charging station (BC), an average wait time between two bookings during which said vehicle will not be booked, which calculation is carried out by executing a computer application based on an artificial intelligence model,
- b) supplying the values of the average wait times calculated in step a) to a computer application for managing charging stations implemented in a computer server (S), which values are used as input data of said application, the output data of said application being requests for activation of the charging stations,
- c) transmitting the requests for activation to the charging stations to which the electric vehicles of the fleet available for booking are connected, the reception of said requests triggering the activation of the stations so that they effectively recharge batteries of the vehicles to which they are connected, which transmission is carried out with said requests being prioritised in ascending order of the values of the average wait times calculated in step a), so that said stations are activated in a time-staggered manner to reduce the electric power peak consumptions on the electrical network and/or to better balance the energy conditions of said electrical network.

2. The method according to claim 1, wherein step a) comprises the following sub-steps:
- a1) calculating for each vehicle of the fleet available for booking an average wait time during which said vehicle will not be booked,
- a2) detecting the battery charging level of each electric vehicle (Vj) available for booking,
- a3) for each electric vehicle (Vj) available for booking, weighting the average wait time calculated in step a1) with the battery charging level of said vehicle so as to obtain a corrected average wait time (ITm'- Vj) of said vehicle.

3. The method according to claim 2, wherein the weighting of step a3) is carried out by dividing the average wait time calculated in step a1) by a coefficient k which depends on the battery charging level of the considered vehicle detected in step a2), with 0≤k≤1.

4. The method according to one of the preceding claims, comprising the following steps:
- prior to step a), implementing a first logical computing process in a computer (35), which first process is adapted to define the geographical area (G) where the vehicles of the fleet are located and to operate a meshing of said area so as to divide it into geographical sub-areas (SG1-SG4),
- executing step a) by implementing a second logical computing process adapted to calculate, in each geographical sub-area (SG1-SG4) and for each vehicle of the fleet available for booking in the considered sub-area (SGi), an average wait time (ITm-SGi) during which said vehicle will not be booked.

5. The method according to claim 4, wherein:
- the calculation of step a) is based on a learning algorithm trained to calculate in a predictive manner at a given date and at a given time point, and in each geographical sub-area (SG1-SG4), an average wait time (ITm-SGi) which is assigned to each vehicle available for booking in the considered sub-area,
- the learning input data of the learning algorithm originate from:
∘ a history of effective requests for booking vehicles (V1-V10) of the fleet, and
∘ all or part of the following data: the location of the geographical sub-areas (SG1-SG4) from which requests for booking have been transmitted during the last X hours, with X comprised between 1 and 168; the distance of the geographical sub-areas (SG1-SG4) with respect to a predefined point of the geographical area (G); for each vehicle (V1-V10) of the fleet to which an "available for booking" status or an "unavailable for booking" status are assigned, the effective times at which their status changes from "available for booking" to "unavailable for booking" and vice versa; climatological data; data relating to a date and time of events having occurred in the geographical area (G) and/or in one of its sub-areas (SG1-SG4); the number of users having vacated vehicles of the fleet during the last Y hours, with Y comprised between 1 and 168 in each geographical sub-area (SG1-SG4),
- the learning output data are the actual wait times of the vehicles (V1-V10) of the fleet in each geographical sub-area (SG1-SG4).

6. The method according to claim 5, wherein:
- at the time of execution of step a), the input data (De1-Den) of the trained learning algorithm (ME) are all or part of the following data: the identification of a considered geographical sub-area (SGi); the location of the geographical sub-areas (SG1-SG4) from which requests for booking have been transmitted during the last X hours, with X comprised between 1 and 168; the distance of the considered geographical sub-area (SGi) with respect to a predefined point of the geographical area (G); climatological data in the geographical area (G) and/or in the considered geographical sub-area (SGi); data relating to the time of events having occurred and/or to occur at the given date, in the geographical area (G) and/or in the considered geographical sub-area (SGi) and/or in the other geographical sub-areas (SG1-SG4); the number of users having vacated vehicles of the fleet during the last Y hours, with Y comprised between 1 and 168 in the considered geographical sub-area (SGi),
- the output data of the trained learning algorithm (ME) is an average wait time (ITm-SGi) which is assigned to each vehicle available for booking in the considered sub-area.

7. The method according to claim 4, wherein:
- the calculation of step a) is based on a learning algorithm trained to calculate in a predictive manner at a given date and at a given time point, and in each geographical sub-area (SG1-SG4), an average wait time (ITm-SGi) which is assigned to each vehicle available for booking in the considered sub-area,
- the learning input data of the learning algorithm originate from:
∘ a history of effective requests for booking vehicles (V1-V10) of the fleet, and
∘ all or part of the following data: the type and the model of each vehicle (V1-V10) of the fleet; the location (V1-V10) of the vehicles of the fleet at the time they are booked; the distance of the vehicles (V1-V10) from the fleet at the time they are booked with respect to a predefined point of the geographical area (G); for each vehicle (V1-V10) of the fleet to which an "available for booking" status or an "unavailable for booking" status are assigned, the effective times at which their status has changed from "available for booking" to "unavailable for booking" and vice versa; climatological data; data relating to the date and time of events having occurred in the geographical area (G) and/or in one of its geographical sub-areas (SG1-SG4); the number of users having vacated vehicles (V1-V10) of the fleet during the last Y hours, with Y comprised between 1 and 168 in each geographical sub-area (SG1-SG4),
- the learning output data is the actual wait times of the vehicles (V1-V10) of the fleet.

8. The method according to claim 7, wherein:
- at the time of execution of step a), the input data (De1-Den) of the trained learning algorithm (ME) are all or part of the following data: the identification of a considered vehicle (Vj) of the fleet; the location of the considered vehicle (Vj) at the time of calculation; for the considered vehicle (Vj), the effective times at which its status has changed from "available" to "unavailable" and vice versa during the last X hours, with X is comprised between 1 and 168; the distance separating the considered vehicle (Vj) with respect to a predefined point of the geographical area (G) at the time of calculation; climatological data in the geographical area (G) and/or in a considered geographical sub-area (SG1-SG4); data relating to the time of events having occurred and/or to occur at the given date, in the geographical area (G) and/or in the geographical sub-areas (SG1-SG4); the number of users having vacated vehicles during the last Y hours, with Y comprised between 1 and 168, in the different geographical sub-areas (SG1-SG4),
- the output data of the trained learning algorithm (ME) is an average wait time (ITm-Vj) specific to the considered vehicle (Vj).

9. The method according to claim 8, wherein the average wait time (ITm-SGi) assigned to each vehicle of the fleet available for booking in a considered sub-area (SGi) is calculated by averaging the average wait times (ITm-Vj) specific to the vehicles available for booking located in said sub-area.

10. The method according to one of the preceding claims, comprising a step of transmitting a request for deactivation to one of the charging stations when the battery charging level of the vehicle to which said station is connected reaches a predetermined threshold value.

11. The method according to one of the preceding claims, wherein, if an electric vehicle has a charging level equal to or higher than a predetermined threshold value at the time said vehicle connects to one of the charging stations, then there is no transmission of request for activation to said station to which said vehicle is connected.

12. A system adapted for implementing the method according to one of the preceding claims, comprising a computer (35) adapted to execute the steps of said method.

13. A computer program product comprising code instructions for executing the steps of the method according to claim 1, when executed by a computer (35).
